# EUROPÄISCHE PATENTSCHRIFT

(11) **EP 4 217 890 B1**
(45) Veröffentlichungstag und Bekanntmachung des Hinweises auf die Patenterteilung: **17.12.2025**
(21) Anmeldenummer: 21740433.4
(22) Anmeldetag: 25.06.2021
(51) Int. Cl.: G06F 21/31, G06F 21/35, G06F 21/45

(54) **SYSTEM ZUM AUTHENTIFIZIEREN UND/ODER IDENTIFIZIEREN EINES NUTZERS**
SYSTEM FOR AUTHENTICATING AND/OR IDENTIFYING A USER
SYSTÈME D'AUTHENTIFICATION ET/OU D'IDENTIFICATION D'UN UTILISATEUR

(30) Priorität: 24.09.2020 DE 102020124996
(43) Veröffentlichungstag der Anmeldung: 02.08.2023
(73) Patentinhaber: Ongrid Sports Technology GmbH, 10179 Berlin (DE)
(72) Erfinder: NORMAN, Simon, 65193 Wiesbaden (DE)
(74) Vertreter: DTS Patent- und Rechtsanwälte PartmbB
(86) Internationale Anmeldenummer: PCT/EP2021/067572
(87) Internationale Veröffentlichungsnummer: WO 2022/063452

(56) Entgegenhaltungen:
- WO-A1-2019/191215
- US-A1- 2004 230 809
- US-A1- 2007 118 891

## Beschreibung

Die Erfindung betrifft ein System zum Authentifizieren und/oder Identifizieren eines Nutzers sowie ein Verfahren zum Betreiben des Systems, insbesondere im Bereich des semi-professionellen Sports oder Profisports oder auch generell für Lizenzen oder Führerscheine, Ausweise etc.. Authentifizierungssysteme sind bereits aus dem Stand der Technik bekannt.

Beispielsweise offenbart die US 2017/0149560 A1 ein Authentifizierungssystem für den Zugang zu einem Datenbanksystem mit mehreren per Netzwerk verbundenen Computern.

Ein weiteres Authentifizierungssystem unter Verwendung von Blockchain bzw. von Distributive Ledger Technologien (DLT) ist aus der US 2017/0330179 A1 bekannt.

Bei Ausweisen ist ebenfalls bereits bekannt, kryptografische Verschlüsselungstechniken einzusetzen, um Ausweise zu verifizieren. Ein derartiges Verfahren sowie das zugehörige System beschreibt die EP 2477352 A1.

Die DE 10003057 A1 offenbart ein System zum Prüfen von Zutrittsausweisen und einen entsprechende Zutrittsausweis.

Die US 2004/0230809 A1 offenbart ein Authentifizierungssystem mit einem tragbaren Badge (BARB Badge) zur automatischen Identifizierung und Zugangskontrolle, insbesondere im medizinischen Umfeld.

In vielen Lebensbereichen ist es erforderlich, sich eindeutig bzw. sogar ein-eindeutig zu identifizieren, ggf. entsprechende Qualifikationen durch Lizenzen oder entsprechende Ausbildungsnachweise vorzuweisen, um Aktivitäten durchführen zu können oder Zugang zu Lehrgängen oder Veranstaltungen zu erhalten.

Dies gilt insbesondere im semi-professionell oder professionell betriebenen Sport, besteht der Bedarf, eine Person zu identifizieren, eine Berechtigung zur Teilnahme an bestimmten Ereignissen zu überprüfen und eventuelle Restriktionen oder ergänzende Informationen abzurufen.

Ein Anwendungsfall sind Wettbewerbe, die etwa im Zusammenhang mit einer Sportliga ausgerichtet werden. Zum Beispiel führen Sportligen Verzeichnisse von Mitgliedern, Personen und Vereinen, die an bestimmten Ereignissen oder an Ereignissen einer bestimmten Kategorie teilnehmen dürfen. Hierzu werden Daten zur Person sowie zu früheren Teilnahmeergebnissen, Anmeldungen, Zahlungen, Qualifikationen und sonstigen Merkmalen und Attributen von Personen und Personengruppen erfasst.

Bei bekannten Systemen besteht eine Herausforderung darin, die Daten zu einem Nutzer aktuell zu halten sowie das Authentifizieren und/oder Identifizieren schnell und effizient durchzuführen.

Sowohl im Lizenzspielerbereich bei Ballsportarten als auch z.B. im Motorsport sind diese Nachweise und die entsprechenden Lizenzen eines Nutzers oder einer Nutzerin großteils papiergebunden.

Es ist daher eine Aufgabe der vorliegenden Erfindung, ein System und ein Verfahren der eingangs genannten Art in vorteilhafter Weise weiterzubilden, insbesondere dahingehend, dass das Authentifizieren und/oder Identifizieren eines Nutzers erleichtert wird und ein effizienterer Betrieb ermöglicht wird.

Diese Aufgabe wird durch ein System der eingangs genannten Art mit den Merkmalen des Anspruchs 1 gelöst.

Die Erfindung basiert auf dem Grundgedanken, dass das System zum Authentifizieren und/oder Identifizieren eines Nutzers vorteilhafterweise papierlos arbeitet und insbesondere voll-digital und insbesondere elektronisch ausgebildet ist. Die Daten zu einem Nutzer sollen zentral im Speichermodul bzw. über mehrere dezentrale Speicherorte vorgehalten sein (wenn das Speichermodul aus mehreren dezentralen Einheiten besteht, z.B. mehrere Speicherserver) und dort dessen Identitätsdaten und sonstigen Eigenschaften wie beispielsweise Qualifikationen oder auch z.B. Sperren oder auch medizinische Daten vorgehalten sein. Zentral (und/oder auch dezentral, z.B. über mehrere Server verteilt), kann dann für den Nutzer ein Authentifizierungs- und/oder Identifizierungselement erstellt werden, das dann dezentral (also z.B. vor Ort bei einer Veranstaltung) gegen die im zentralen Speichermodul vorgehaltenen Daten abgeglichen werden kann, um eine Authentifizierung und/oder Identifizierung durchzuführen. Hierzu dient dann das Ausgabemodul, mit der dann das Authentifizierungs- und/oder Identifizierungselement auslesbar und/oder anzeigbar ist. Denkbar ist, hier dass man Kontrollposten (entweder repräsentiert durch Kontrollpersonen oder durch entsprechende maschinelle Kontrollposten) einsetzt, die mit dem Ausgabemodul versehen sind und das hierüber die Authentifizierung und/oder Identifizierung erfolgen kann. Dies kann dann entweder manuell erfolgen durch Kontrollpersonen und durch Anzeige und Abgleich der Daten (z.B. nach einem Ampelsystem) und/oder semi-automatisch oder automatisch durch entsprechende maschinelle Kontrollposten.

Das Authentifizierungs- und/oder Identifizierungssystem zum Authentifizieren und/oder Identifizieren eines Nutzers kann insbesondere im Bereich des semi-professionellen Sports oder Profisports oder auch generell für Lizenzen oder Führerscheine, Ausweise etc. verwendet werden. Denkbar ist beispielsweise der Einsatz für Lizenznachweise im Motorsport, Radsport, Lizenzspielerausweise in Sportligen wie Fussball, Handball, Basketball, Golf (hier Handicap und Platzreife), aber beispielsweise auch im Jagd- und/oder Fischerwesen z.B. also digitale und fälschungssichere Waffenbesitzkarten, Jagdscheine, Jagdpatente, Jagdlizenzen, Fischereischeine (auch länderübergreifend, z.B. mehrere Jagderlaubnisse in unterschiedlichen Ländern im selben Zeitraum, z.B. bei Jagderlaubnis im Heimatland und bei gleichzeitigen Jagdreisen ins Ausland).

Das Speichermodul kann beispielsweise dazu eingerichtet sein, wenigstens ein, im Normalbetrieb aber eine Vielzahl von Authentifizierungs- und/oder Identifizierungselementen vorzuhalten, also dem Nutzer zugeordnete Identifikationsdaten und/oder Berechtigungsdaten zu speichern und/oder bereitzustellen. Das Speichermodul ist zum Beispiel dazu eingerichtet, persönliche Daten eines Nutzers zu speichern. Ferner können weitere zur Authentifizierung und/oder Identifikation des Nutzers dort gespeichert werden. Ferner können Informationen über eine vergangene Teilnahme des Nutzers an definierten Ereignissen und seine dabei erzielten Ergebnisse gespeichert werden. Ferner kann eine Zuordnung des Nutzers zu bestimmten Gruppen oder Kategorien von Nutzern gespeichert werden.

Darüber hinaus kann vorgesehen sein, dass das Speichermodul als zentrales und/oder dezentrales Speichermodul ausgebildet ist. Dadurch wird vorteilhafterweise eine besonders flexible und effiziente Verwaltung der relevanten Daten erreicht.

Das Speichermodul kann beispielsweise von einem externen Server umfasst sein.

Wenn das Speichermodul zentral ausgebildet ist, dann erfolgt die Speicherung und/oder Bereitstellung von relevanten Daten zum Beispiel durch ein einzelnes zentrales Speichermodul oder koordiniert durch ein solches zentrales Speichermodul, dem jedoch mehrere weitere Untereinheiten zugeordnet sein können.

Wenn das Speichermodul dezentral ausgebildet ist, dann können die Speicherung und/oder Bereitstellung relevanter Daten durch zumindest zwei separate Speichermodule erfolgen, etwa verschiedene externe Server des Systems. Es kann vorgesehen sein, dass eine Datenbank in Gänze bei verschiedenen Speichermodulen gespeichert ist und/oder dass verschiedene Teile einer Datenbank bei verschiedenen Speichermodulen gespeichert sind. Insbesondere speichern verschiedene dezentrale Speichermodule verschiedene Teile einer Datenbank; insbesondere werden in diesem Fall die Anfragedaten an lediglich ein relevantes dezentrales Speichermodul übertragen und/oder die Freigabedaten werden von einem relevanten Speichermodul bereitgestellt.

Bei einem dezentral ausgebildeten Speichermodul kann vorgesehen sein, dass zwischen zumindest zwei Speichermodulen, insbesondere zwischen sämtlichen Speichermodulen des Systems, eine Synchronisierung der zu einem Nutzer gespeicherten Daten erfolgt.

Insbesondere kann bei einer dezentralen Speichereinheit vorgesehen sein, dass die Daten mittels eines Blockchain-Verfahrens verifizierbar gespeichert werden, wobei insbesondere Änderungen mittels eines kryptografischen Verfahrens dokumentiert und Manipulationen unterbunden beziehungsweise erkennbar gemacht werden können.

Es können Blockchain-Verfahren in verschiedenen Modulen des Systems und/oder auf verschiedenen Stufen des Verfahrens zu seinem Betrieb verwendet werden. Beispielsweise kann eine kryptografische Verifizierung und/oder Absicherung mittels eines Blockchain- Verfahrens bei dem Speichermodul, dem Authentifizierungs- und/oder Identifizierungselement, dem Überprüfungsmodul (siehe insbesondere nachstehend) und/oder einem Nutzergerät zum Implementieren eines Elements des Systems ausgeführt werden.

Das Authentifizierungs- und/oder Identifizierungselement kann insbesondere aus einem mittels des Eingabe- und Datensammelmoduls erstellten Datensatzes bestehen. Der Datensatz kann elektronisch bzw. digital sein. Denkbar ist, dass der Datensatz codiert und z.B. mittels eines kryptographischen Verfahrens wie Blockchain bzw. einem Verfahren aus dem Bereich der Distributed-Ledger-Technologie (DLT) abgesichert ist.

Zum Beispiel kann ein Verfahren aus dem Bereich der Distributed-Ledger-Technologie (DLT) eingesetzt werden, etwa ein Blockchain-Verfahren, um die Integrität der Daten und die Nachvollziehbarkeit vorangegangener Änderungen kryptografisch zu sichern.

Neben Blockchain sind alternativ oder zusätzlich auch Verfahren wie IOTA oder Hashgraph. Weitere Beispiele sind Ethereum, Hyperledger, Corda, Openchain, BigChainDB etc.

Der Begriff Distributed-Ledger-Technologie (DLT) bezeichnet dabei eine Technik, die für die Dokumentation bestimmter Transaktionen benutzt wird. Im Gegensatz zum klassischen Ansatz, bei dem ein Hauptbuch (ledger) in der Regel von nur einer Instanz verwaltet wird, werden bei DLT dezentral und beliebig viele prinzipiell gleichgestellte Kopien des Ledgers von unterschiedlichen Parteien unterhalten. Durch geeignete Maßnahmen wird dafür gesorgt, dass neu hinzuzufügende Transaktionen in allen Kopien des Ledgers übernommen werden und dass es zu einer Übereinkunft (Konsensus) über den jeweils aktuellen Stand des Ledgers kommt.

Die DLTs unterscheiden sich beispielsweise durch die Art, wie die vernetzten Computer zu einer Vereinbarung kommen (d.h. die Konsensusprotokolle), etwas durch proof of work wie in Bitcoin, durch den Nachweis ökonomischer Interessen (proof of stake, wie in Ethereums Casper), durch einen Koordinator wir in Raft oder durch Wahlen wie in Swirlds.

Es gibt öffentliche DLTs (jeder kann sich am Netzwerk beteiligen und die Daten einsehen) und private DLTs (die nur einem begrenzten Kreis Zugang und Beteiligung gewähren).

Bei öffentlichen DLTs sind verschiedene Server vorhanden, die minen bzw. bei der Berechnung der Prüfsummen und der Authentifizierung teilnehmen, hierfür auch vergütet werden (z.B. in Bitcoin) und die die Transaktion bestätigen.

Insbesondere kann das Authentifizierungs- und/oder Identifizierungselement dazu ausgebildet sein, einer Überprüfungseinheit (wie beispielsweise dem nachstehend beschriebenen Überprüfungsmodul) die notwendigen Informationen zum Generieren der Anfragedaten und/oder zur Authentifizierung und/oder Identifikation anhand der empfangenen Freigabedaten bereitzustellen. Es dient beispielsweise als Ausweis für den Nutzer, wobei die Überprüfungseinheit anhand der vom Authentifizierungs- und/oder Identifizierungselement erfassten Informationen die Anfragedaten so erzeugt, dass das Speichermodul mit diesen Daten die Authentifizierung und/oder Identifikation durchführen und die entsprechenden Freigabedaten erzeugen und bereitstellen kann.

So können die Anfragedaten beispielsweise eine Anfrage des Inhalts umfassen, ob eine bestimmte Person, etwa der Inhaber des Authentifizierungs- und/oder Identifizierungselements, berechtigt ist, bei einem Sportereignis zu starten und/oder welche Bedingungen dabei erfüllt sein müssen.

Wie bereits vorstehend erwähnt kann das System unter Anderem ein eigens entwickeltes DLT System oder eine öffentliches DLT System wie Blockchain sein.

Des Weiteren ist denkbar, dass das Authentifizierungs- und/oder Identifizierungselement auf einer Identifikationskarte und/oder einem Badge und/oder einer App (insbesondere auf einem mobilen Endgerät wie einem Smartphone und/oder Tablet) dergleichen hinterlegt ist. Die Hinterlegung auf einem solchen (körperlichen) Authentifizierungsmittel kann beispielsweise auf einem Speicherchip oder einem Magnetstreifen, per mobile App durch NFC, Barcode oder per Bluetooth oder in sonstiger geeigneter Art und Weise erfolgen. Denkbar ist auch, dass hier zusätzlich z.B. auf der Identifikationskarte ein grafisches Anzeigeelement vorgesehen ist. Dadurch kann vorteilhafterweise ein Element bereitgestellt werden, mittels dessen auf sich ein Nutzer auf besonders einfache Weise ausweisen kann.

Eine Identifikationskarte kann beispielsweise auf an sich bekannte Weise als kunststoff- oder Papierkarte ausgebildet sein. Es können Daten gespeichert sein, etwa mittels eines Aufdrucks oder einer grafischen Darstellung. Beispielsweise kann ein Barcode oder ein vergleichbarer Code als grafische Darstellung zur Speicherung und Bereitstellung von Daten verwendet werden.

Vorzugsweise ist das Authentifizierungs- und/oder Identifizierungselement in Form einer App (also einer Software für ein mobiles Endgerät wie ein Smartphone oder einen Tablet-PC) realisiert, die dem Nutzer (z.B. dem Spieler, Fahrer oder der Person, die sich authentifizieren und ihre Qualifikation nachweisen möchte) zur Verfügung steht.

So kann besonders vorteilhaft die Authentifizierung über eine App gesteuert werden, die jedem User zu Verfügung gestellt wird. Denkbar ist, die Basis-App kostenlos zum Download zur Verfügung zu stellen und über In-App-Käufe Lizenzkäufe, das Einbuchung in Veranstaltungen, Kauf von Berechtigungen etc. zu ermöglichen. In der App bzw. in einem über die App zugänglichen Speicher, z.B. einem Cloud-Speicher, sind sowohl die Lizenzen und/oder Fahrberechtigungen und/oder Permits und/oder sonstige Authentifizierungsinformation hinterlegt, sowie die Medizinischen Daten, mit denen der User sich eindeutig authentifizieren kann, ergänzt durch Biometrische Daten (z.B. für Gesichtserkennung und/oder Fingerabdruck und/oder Retina-Scan etc.).

Denkbar ist auch, dass es sich um eine Identifikationskarte im weiteren Sinne handelt, wie beispielsweise ein Badge aus Kunststoff (Erkennungsmarke, z.B. in Form einer Rundmarke etc.), oder auch ein in ein Kleidungsstück oder einen Protektor (z.B. im Helm) eingearbeitetes Element.

Sie kann als Chipkarte mit einer integrierten elektronischen Schaltung ausgebildet sein, etwa mit einem integrierten Schaltkreis, einer gedruckten Schaltung, RFID (radio-frequency identification), einem Chip für eine Nahfeldkommunikation (*near field communication,* NFC) oder mit einem anderen Modul.

Ferner kann das Authentifizierungs- und/oder Identifizierungselement wenigstens ein Sicherheitsmerkmal umfassen, etwa ein Hologramm oder einen Chip zur Bereitstellung von fälschungssicheren Daten, etwa mittels kryptografischer Verfahren (z.B. Blockchain- Verfahren).

Das Authentifizierungs- und/oder Identifizierungselement kann ferner ein grafisches Anzeigeelement umfassen, das insbesondere von einer Anzeigeeinheit ausgegeben wird, etwa auf einem Display. Beispielsweise kann das Anzeigeelement von einem tragbaren Rechnergerät ausgegeben werden, etwa einem Mobiltelefon oder Tablet-Computer. Das Anzeigeelement kann etwa einen Barcode oder eine vergleichbare maschinenlesbare Darstellung mit kodierten Informationen umfassen.

Das Anzeigeelement kann statisch ausgebildet sein oder es kann für einen mittels des Authentifizierungs- und/oder Identifizierungselements ausgeführten Vorgang neu erzeugt werden.

Das Authentifizierungs- und/oder Identifizierungselement kann ferner einen physischen oder virtuellen Token umfassen. Als Token kann ein Gegenstand bezeichnet werden, an den die Funktion des Authentifizierungs- und/oder Identifizierungselements geknüpft ist. Als Token kann ferner ein virtuelles Objekt verwendet werden, etwa eine Signaturdatei, ein oder mehrere Hash-Werte, ein Passwort, ein Bild, eine Datei oder ein anderes Objekt. Bei einem virtuellen Token kann ferner ein kryptografisches Verfahren genutzt werden, insbesondere um die Identität eines Nutzers zu bestätigen, wenn dieser etwa ein Passwort bereitstellen muss, oder um sicherzustellen, dass der Token aktuell und nicht veraltet ist.

Der Austausch eines solchen Tokens kann beispielsweise kabellos per WiFi, per Bluetooth oder auch per RFID oder NFC erfolgen.

Bei dem System ist das Eingabe- und Datensammelmodul dem Nutzer nicht zugänglich, sondern lediglich einer berechtigten Person. Der Nutzer kann im Allgemeinen nur mittelbar Zugriff erlangen, indem er eine Berechtigung nachweist, etwa durch ein Verfahren zum Einloggen bei einem bestimmten Nutzerkonto oder durch einen anderen Berechtigungsnachweis.

Insbesondere weist das Eingabe- und Datensammelmodul eine Schnittstelle auf, die das Erfassen und/oder Einlesen von Daten erlaubt, die durch das Speichermodul gespeichert werden und die für das Authentifizieren und/oder Identifizieren des Nutzers relevant sind. Beispielsweise kann dies über eine als Softwaremodul ausgebildete Schnittstelle erfolgen. Es kann eine Eingabe von Daten mithilfe einer App oder einer anderen Computeranwendung erfasst werden.

Ferner kann das Eingabe- und Datensammelmodul Daten automatisiert erfassen, etwa über eine Schnittstelle zu einer Datenbank. Beispielsweise können einem Nutzer zugeordnete Ereignisse und erzielte Ergebnisse erfasst werden. Ferner können andere Qualifikationen und/oder Merkmale des Nutzers erfasst werden.

Es kann ein automatisches Aktualisieren von Daten erfolgen, die einem Nutzer zugeordnet sind und insbesondere durch das Speichermodul gespeichert werden. Hierzu kann etwa auf eine externe Datenbank zugegriffen werden. Beispielsweise kann regelmäßig oder ausgelöst durch bestimmte Ereignisse überprüft werden, ob Daten aktuell sind. Ferner kann eine externe Datenbank dazu eingerichtet sein, bei einer Änderung bestimmter Daten Informationen über diese Änderung an das Eingabe- und Datensammelmodul zu übertragen, wo dann insbesondere eine Aktualisierung veranlasst wird.

Bei dem System ist das Eingabe- und Datensammelmodul so ausgebildet, dass damit das Authentifizierungs- und/oder Identifizierungselement erstellt und/oder verändert werden kann. Dies kann auf verschiedene Weisen erfolgen. Zum Beispiel kann das Eingabe- und Datensammelmodul Informationen zum Herstellen eines physischen Authentifizierungs- und/oder Identifizierungselements erzeugen und ausgeben, etwa Daten, die auf eine Identifikationskarte gedruckt oder gespeichert werden. Ferner kann ein virtuelles Authentifizierungs- und/oder Identifizierungselement mittels des Eingabe- und Datensammelmoduls erzeugt werden, etwa eine digitale Datei, ein Zertifikat, ein Barcode oder eine andere maschinenlesbare Kodierung, ein Bild, ein Sicherheitsmerkmal oder eine andere geeignete Information.

Das Überprüfungsmodul des Systems kann das Authentifizierungs- und/oder Identifizierungselement erfassen. Das heißt, es kann es zumindest bestimmte dem Authentifizierungs- und/oder Identifizierungselement zugeordnete Daten erfassen, etwa durch Auslesen eines Informationsträgers auf verschiedene Weisen.

Das Überprüfungsmodul kann dabei etwa ein Lesegerät zum Auslesen und/oder Erfassen des Authentifizierungs- und/oder Identifizierungselements umfassen. Beispielsweise kann das Überprüfungsmodul als Softwaremodul eines Lesegeräts ausgebildet sein, beispielsweise eine mobilen Geräts eines Anwenders, wie etwa ein Mobiltelefon oder ein Mobilgerät mit einer Sensoreinheit und einer Recheneinheit, oder es kann als stationäre Gerät ausgebildet sein, etwa an einer Schranke, einem Drehkreuz, einem Tor oder einer anderen Zugangsbeschränkung.

Bei einer Ausbildung des Authentifizierungs- und/oder Identifizierungselements mit einem grafischen Anzeigeelement kann das Erfassen durch das Überprüfungsmodul insbesondere optisch erfolgen, etwa mittels einer Kamera oder eines Scanners. Dies ist vorteilhafterweise besonders einfach, da Kameras auch in mobilen Nutzergeräten weit verbreitet sind und die optische Verbindung sehr einfach hergestellt werden kann.

Bei einer weiteren Ausbildung kann das Authentifizierungs- und/oder Identifizierungselement ferner ein nicht grafisches Datenelement umfassen, etwa ein Funksignal, das von dem Authentifizierungs- und/oder Identifizierungselement bereitgestellt und von dem Überprüfungsmodul empfangen wird. Beispielsweise können Daten mittels Nahfeldkommunikation übertragen werden. Die Verarbeitung der übertragenen Daten kann in ähnlicher Weise erfolgen wie bei einer optischen Übertragung entsprechender Informationen über ein grafisches Anzeigeelement.

Darüber hinaus kann vorgesehen sein, dass das Authentifizierungs- und/oder Identifizierungssystem wenigstens ein Überprüfungsmodul aufweist, mittels dessen das Authentifizierungs- und/oder Identifizierungselement überprüfbar ist, insbesondere automatisch überprüfbar ist.

Dadurch wird vorteilhafterweise eine besonders klar strukturierte und zuverlässige Erfassung, Verwaltung und Bereitstellung aller relevanten Informationen erreicht. Ferner kann ein Authentifizieren und/oder Identifizieren besonders effizient und sicher vorgenommen werden.

Des Weiteren ist denkbar, dass das Überprüfungsmodul dazu eingerichtet ist, anhand des erfassten Authentifizierungs- und/oder Identifizierungselements Anfragedaten zu erzeugen und an das Speichermodul zu übertragen, wobei weiter ein Freigabedatenerzeugungsmodul vorgesehen ist, mittels dessen auf der Grundlage der Anfragedaten sowie der im Eingabe- und Datensammelmodul vorgehaltenen Daten zum jeweiligen Nutzer Freigabedaten zu erzeugen und dem Überprüfungsmodul zur Überprüfung zuzuleiten.

Durch einen derartigen Austausch von Anfragedaten und Freigabedaten, die ggf. entsprechend noch mit kryptographischen Verfahren abgesichert werden, kann ein besonders sicherer, insbesondere manipulationssicherer Abgleich von Daten erfolgen.

Außerdem kann vorgesehen sein, dass die von dem Überprüfungsmodul erzeugten Anfragedaten eine Zuordnung des Nutzers zu einer bestimmten Kategorie umfassen. Dadurch wird vorteilhafterweise effizienter ein Datenabgleich und eine Überprüfung möglich, da durch die Kategorisierung direkt in der entsprechenden Datensatzkategorie geprüft werden kann, in welcher Hinsicht eine Authentifikation und/oder Identifikation des Nutzers erfolgen soll.

Zum Beispiel kann eine Kategorie solche Nutzer umfassen, die zur Teilnahme an bestimmten Ereignissen berechtigt sind. Ferner können solche Nutzer einer gemeinsamen Kategorie zugeordnet sein, die eine bestimmte Berechtigung, Qualifikation oder Einschränkung haben. Ferner können die Kategorien bestimmten Ereignissen entsprechen, die einem Nutzer zugeordnet sein können, etwa weil ein Nutzer an einem Ereignis teilgenommen hat. Ferner kann die Zuordnung eines Nutzers zu einer Kategorie an bestimmte Merkmale und/oder Voraussetzungen geknüpft sein, die fest mit der Person des Nutzers verbunden oder veränderlich ausgeprägt sein können.

Dabei kann zudem zumindest eine Klasse von Kategorien so definiert sein, dass ein Nutzer genau einer Kategorie zugeordnet ist. Ferner kann eine Klasse von Kategorien so definiert sein, dass ein Nutzer mehreren Kategorien und optional auch keiner Kategorie zugeordnet ist.

Beispielsweise können die Anfragedaten so gebildet sein, dass sie die Zulassung des Nutzers zur Teilnahme an einem Ereignis überprüfen, wobei die Zulassung an die Zugehörigkeit zu einer bestimmten Klasse oder Kategorie von Nutzern geknüpft ist.

Darüber hinaus kann vorgesehen sein, dass das Authentifizierungs- und/oder Identifizierungssystem dazu eingerichtet ist, zumindest teilweise die Anfragedaten und/oder die Freigabedaten mittels eines kryptographischen Verfahrens, insbesondere eines Blockchain-Verfahrens zu erzeugen. Dadurch wird vorteilhafterweise eine besonders hohe Sicherheit erreicht, da verschiedene Daten, ihre Änderungen und weitere Ereignisse kryptografisch miteinander so verknüpft werden, dass Manipulationen unterbunden werden.

Bei dem Verfahren werden die Freigabedaten in Abhängigkeit von den Anfragedaten erzeugt. Insbesondere wird dabei in Abhängigkeit von den Anfragedaten bestimmt, welche Informationen zur Beantwortung der Anfrage notwendig sind, und diese notwendigen Daten werden mit den Freigabedaten übertragen. Dadurch kann etwa Datenschutzanforderungen entsprochen werden. Dies ermöglicht es beispielsweise auch, besonders sensible Daten wie medizinische Daten so verarbeiten zu können.

Zum Beispiel können die Freigabedaten so gebildet werden, dass sie lediglich ein positives oder negatives Ergebnis einer Anfrage umfassen. Sie können ferner zusätzliche Informationen umfassen, etwa eine Begründung für ein positives oder negatives Ergebnis. Sie können ferner zusätzliche dem Nutzer zugeordnete Informationen umfassen, etwa zusätzliche Bedingungen für eine Freigabe.

Des Weiteren ist möglich, dass das Überprüfungsmodul ferner dazu eingerichtet, anhand der empfangenen Freigabedaten eine Freigabeinformation zu erzeugen und auszugeben. Dadurch kann ein Anwender vorteilhafterweise besonders schnell und einfach das Ergebnis der Authentifizierung und/oder Identifikation des Nutzers erkennen. Denkbar wäre beispielsweise, die Nutzerdaten als Freigabeinformation anzuzeigen, um eine entsprechende Freigabe zu ermöglichen. Dies kann auch mit einer Ampel kombiniert sein, um eine intuitive Ausgabe der Freigabeinformation zu ermöglichen. Die Freigabeinformation kann eine positive Freigabeinformation sein (z.B. Nutzer ist berechtigt, Status "grün", bei Einsatz einer "Ampel" auf "grün" gestellt), eine negative Freigabeinformation sein (z.B. Nutzer ist nicht berechtigt, beispielsweise wegen einer Sperre oder medizinischer Gründe oder finanzieller Gründe (z.B. Gebühren noch nicht gezahlt), bei Einsatz einer "Ampel" auf "rot" gestellt) oder eine zu klärender Status, bei dem noch Information gesondert abgeklärt werden müssen (z.B. Nutzerstatus nicht klar, bei Einsatz einer "Ampel" auf "gelb" gestellt). Denkbar ist, dass das System auch nur binär arbeitet, d.h. es gibt entweder einer Freigabe (Status "grün") oder nicht (Status "rot").

Die Freigabedaten können also verschiedene Informationen umfassen, etwa ein positives oder negatives, gegebenenfalls auch ein bedingt positives oder negatives Ergebnis. Sie können ferner Informationen über dem Nutzer zugeordnete Merkmale umfassen, etwa eine Berechtigung für die Teilnahme an Ereignissen für verschiedene Klassen oder eine Berechtigung zu Nutzung bestimmter Anlagen. Sie können zudem eine Fahrberechtigung für eine bestimmte Kategorie von Ereignissen umfassen. Sie können ferner dem Nutzer zugeordnete medizinische Daten umfassen. Sie können ferner Daten über eine dauerhafte oder zeitweise Sperrung des Nutzers umfassen.

Insbesondere ist denkbar, dass die Freigabeausgabe ein grafisches Freigabe-Signal-Element umfasst, das einen in Abhängigkeit von den Freigabedaten gebildeten farblichen Ausgabeparameter. Dadurch wird vorteilhafterweise eine besonders einfach erfassbare Ausgabe bereitgestellt.

In vorteilhafter Ausführung sind die Freigabe Signale nur im Hintergrund für die Organisation bzw. den Betreiber des Systems, also z.B. für den ASN bzw. den Promoter sichtbar. Der User hat so keinen Zugriff auf die Freigabeausgabe.

Zum Beispiel kann die Freigabeausgabe nach Art einer Ampel erfolgen, wobei verschiedenen Farben ein positives (grün), negatives (rot) und optional ein bedingtes (gelb) Ergebnis anzeigen können.

Ein bedingtes Ergebnis der Authentifizierung und/oder Identifikation kann dann vorliegen, wenn zum Erreichen einer positiven Freigabe weitere Daten bereitgestellt werden müssen und/oder eine bestimmte Bedingung erfüllt werden muss. Ferner kann ein für die Zukunft absehbares negatives Ergebnis unter bestimmten Bedingungen angezeigt werden, etwa wenn eine Zahlung zu tätigen ist, um die positive Freigabe auch zukünftig zu erhalten.

Des Weiteren kann vorgesehen sein, dass das System ferner ein Antragsmodul aufweist, das dazu eingerichtet ist, eine Nutzereingabe zu erfassen, in Abhängigkeit von der Nutzereingabe Änderungsdaten zu erzeugen und anhand der Änderungsdaten bei dem Speichermodul gespeicherte Authentifizierungs- und/oder Identifizierungsdaten zu ändern.

Dadurch können die einem Nutzer zugeordneten bei dem Speichermodul gespeicherten Daten vorteilhafterweise besonders einfach aktualisiert werden. Ferner kann dem Nutzer eine Schnittstelle zur Verfügung gestellt werden, mittels welcher er einen Einfluss auf das Speichermodul nehmen kann, auch ohne direkten Zugriff darauf zu haben.

Die Änderungsdaten umfassen beispielsweise eine Beantragung einer Änderung der dem Nutzer zugeordneten Identifikationsdaten und/oder Berechtigungsdaten. Beispielsweise können die Antragsdaten an eine Genehmigungsstelle übertragen werden, etwa an einen berechtigen Anwender, und in Abhängigkeit von einer Genehmigung der Genehmigungsstelle können die Authentifizierungs- und/oder Identifizierungsdaten geändert werden.

Eine Vornahme einer Änderung der dem Nutzer zugeordneten Identifikationsdaten und/oder Berechtigungsdaten kann ferner mittels eines Blockchain-Verfahrens verwaltet werden, insbesondere um sicherzustellen, dass die Änderung wirksam für jedes folgende Authentifizieren und/oder Identifizieren erfolgt ist.

Insbesondere ist das Antragsmodul ferner dazu eingerichtet, eine Identifikation des Nutzers vorzunehmen, etwa mittels eines Logins, durch Erfassen eines Zugangsschlüssels oder Zugangscodes, durch eine Verifikation mittels Blockchain oder auf andere Weise, durch die sichergestellt werden kann, dass die Nutzereingabe durch eine berechtigte Person vorgenommen wird. Die Nutzereingabe kann bei einer weiteren Ausbildung auch automatisch und/oder von einer Recheneinheit erfasst werden. Auch hier kann, analog zur Erfassung einer Nutzereingabe einer Person, eine Identifikation und Prüfung der Berechtigung zum Vornehmen der Eingabe erfolgen.

Insbesondere umfassen die Änderungsdaten eine Aufforderung oder einen Antrag zur Vornahme der Änderung. Die Änderungsdaten können Informationen über die Art der vorzunehmenden Änderung umfassen. Sie können ferner Informationen über einen Grund für diese Änderung und/oder einen Beleg für eine Änderungsberechtigung umfassen. Beispielsweise ist ein bestimmter Beleg erforderlich, um eine bestimmte Änderung vornehmen zu lassen, etwa ein Beleg für eine Zahlung, ein definiertes Ereignis oder eine an eine bestimmte Person oder Organisation geknüpfte Änderungsberechtigung.

Des Weiteren betrifft die vorliegende Erfindung ein Verfahren zum Authentifizieren und/oder Identifizieren eines Nutzers. Dabei ist vorgesehen, dass Verfahren zum Authentifizieren und/oder Identifizieren eines Nutzers, mit den folgenden Schritten durchgeführt wird:
- ein Authentifizierungs- und/oder Identifizierungselement, das einem Nutzer eindeutig zugeordnet ist; erzeugt wird mittels wenigstens eines Eingabe- und Datensammelmoduls (24), das dem Nutzer nicht zugänglich ist und mittels dessen das Authentifizierungs- und/oder Identifizierungselement (40) erstellbar und/oder veränderbar ist; und
- es wird wenigstens einem Ausgabemodul (50) bereitgestellt, mittels dessen das Authentifizierungs- und/oder Identifizierungselement (40) auslesbar und/oder anzeigbar ist.

Das Verfahren ist insbesondere dazu ausgebildet, das System zu betreiben. Es weist daher dieselben Vorteile auf wie das erläuterte System.

Die Erfindung betriff ferner eine Verwendung des erläuterten Systems zum Feststellen einer Teilnahmeberechtigung eines Nutzers, insbesondere an einem Sportereignis.

Dabei ist insbesondere ein Lizenzierungssystem für eine Vielzahl von Nutzern vorgesehen, wobei den Nutzern Kategorien zugeordnet sind, in Abhängigkeit von denen eine Teilnahmeberechtigung vorliegen kann.

Die Erfindung betrifft ferner eine Verwendung des vorstehend erläuterten Authentifizierungs- und/oder Identifizierungssystems zum Implementieren eines digitalen und/oder elektronischen Sportausrüstungs- und/oder Sportgerätepasses, insbesondere eines Kraftfahrzeugpasses (bzw. sog. Wagenpass).

Weitere Einzelheiten und Vorteile der Erfindung sollen nun anhand eines in den Zeichnungen näher dargestellten Ausführungsbeispiels erläutert werden.

Es zeigen:
- Fig. 1: ein Ausführungsbeispiel eines erfindungsgemäßen Authentifizierungs- und/oder Identifizierungssystems im Zusammenhang mit einem Ausführungsbeispiel des erfindungsgemäßen Verfahrens;
- Fig. 2: ein Ausführungsbeispiel des Verfahrens, durchgeführt mit dem System gem. Fig. 1;
- Fig. 3: einen schematischen Ablauf des Einsatzes des erfindungsgemäßen Systems für die Erstregistrierung und Lizenzerneuerung ("first time registration process & annual distribution process - digital licensing");
- Fig. 4: einen schematischen Ablauf des Einsatzes des erfindungsgemäßen Systems für eine Registrierung für eine Sportveranstaltung ("registration process - digital licensing");
- Fig. 5: einen schematischen Ablauf des Einsatzes des erfindungsgemäßen Systems in eine medizinischen Notfall ("medical use case - digital licensing");
- Fig. 6: einen schematischen Ablauf des Einsatzes des erfindungsgemäßen Systems für eine Implementierung eines digitalen Sportausrüstungspasses ("Digital Car / Sport Equipment Pass - digital licensing"); und
- Fig. 7: einen schematischen Ablauf des Einsatzes des erfindungsgemäßen Systems für eine Implementierung einer Tokenisierung einer Anlageklasse ("Digital Car / Sport Equipment Pass / Tokenisierung - digital licensing").

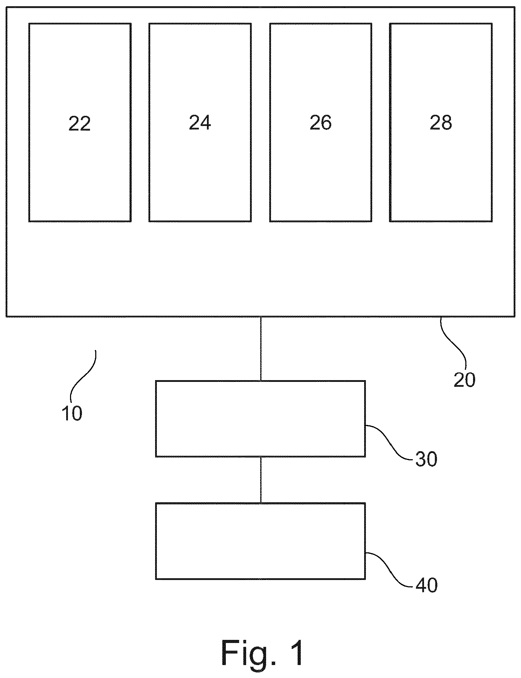

Fig. 1 zeigt ein Ausführungsbeispiel eines erfindungsgemäßen Authentifizierungs- und/oder Identifizierungssystems 10 im Zusammenhang mit einem Ausführungsbeispiel des erfindungsgemäßen Verfahrens.

Das System 10 umfasst einen externen Server 20.

Der externe Server wiederum umfasst bei dem Ausführungsbeispiel ein Speichermodul 22, ein Freigabedatenerzeugungsmodul, ein Eingabe- und Datensammelmodul 24, ein Antragsmodul 26 und ein Steuermodul 28. Bei weiteren Ausführungsbeispielen können einzelne oder sämtliche dieser Module 22 bis 28 von separaten Einheiten umfasst oder auf andere Weise als eigene Einheiten ausgebildet sein.

Das System 10 umfasst ferner ein Überprüfungsmodul 30.

Das System 10 umfasst zudem ein Authentifizierungs- und/oder Identifizierungselement 40.

Das Authentifizierungs- und/oder Identifizierungselement besteht im gezeigten Ausführungsbeispiel aus einem mittels des Eingabe- und Datensammelmoduls erstellten Datensatzes. Der Datensatz ist elektronisch auf einer Identifikationskarte hinterlegt. Denkbar ist, dass der Datensatz codiert und z.B. mittels eines kryptographischen Verfahrens wie Blockchain abgesichert ist.

Insbesondere kann das Authentifizierungs- und/oder Identifizierungselement dazu ausgebildet sein, einer Überprüfungseinheit (wie beispielsweise dem nachstehend beschriebenen Überprüfungsmodul) die notwendigen Informationen zum Generieren der Anfragedaten und/oder zur Authentifizierung und/oder Identifikation anhand der empfangenen Freigabedaten bereitzustellen. Es dient beispielsweise als Ausweis für den Nutzer, wobei die Überprüfungseinheit anhand der vom Authentifizierungs- und/oder Identifizierungselement erfassten Informationen die Anfragedaten so erzeugt, dass das Speichermodul mit diesen Daten die Authentifizierung und/oder Identifikation durchführen und die entsprechenden Freigabedaten erzeugen und bereitstellen kann.

Das Überprüfungsmodul 30 ist bei dem Beispiel als Softwaremodul ausgebildet, mittels 5 dessen ein Lesegerät zum Erfassen des Authentifizierungs- und/oder Identifizierungselements 40 angesteuert wird. Bei dem Beispiel wird die Identifikationskarte 40 eingelesen, indem von einem Chip der Identifikationskarte 40 bereitgestellte Informationen per Nahfeldkommunikation (NFC) ausgelesen werden. Alternativ oder zusätzlich können Informationen optisch erfasst werden, insbesondere ein auf der Identifikationskarte 40 abgedruckter Barcode oder eine andere aufgedruckte maschinenlesbare Informationsdarstellung.

Bei weiteren Ausführungsbeispielen kann das Authentifizierungs- und/oder Identifizierungselement 40 auf andere Weise ausgebildet sein, etwa umfassend ein Ausgabeelement, das durch ein Ausgabegerät eines Nutzers ausgebbar ist. Dies kann eine optisch erfassbare Anzeige umfassen, etwa ein Bild, eine Ziffern- und/oder Textanzeige, ein Barcode oder eine andere grafisch kodierte Informationsausgabe. Alternativ oder zusätzlich kann eine elektronisch erfassbare Ausgabe erfolgen, etwa eine Übertragung von Daten mittels an sich bekannter Verfahren, beispielsweise über ein Kabel oder kontaktlos per Bluetooth, NFC, WiFi, per Funk, induktiv oder auf andere Weise.

Zwischen dem externen Server 20 und dem Überprüfungsmodul 30 besteht bei dem Beispiel zumindest zeitweise eine datentechnische Verbindung, die auf an sich bekannte Weise hergestellt wird. Bei dem vorliegenden Beispiel sind diese Module 20, 30 an ein gemeinsames Netzwerk angeschlossen, über das die datentechnische Verbindung hergestellt wird, insbesondere das Internet und/oder ein Mobilfunknetz. Bei verschiedenen Ausführungsbeispielen können drahtlose und kabelgebundene Verbindungen vorgesehen sein.

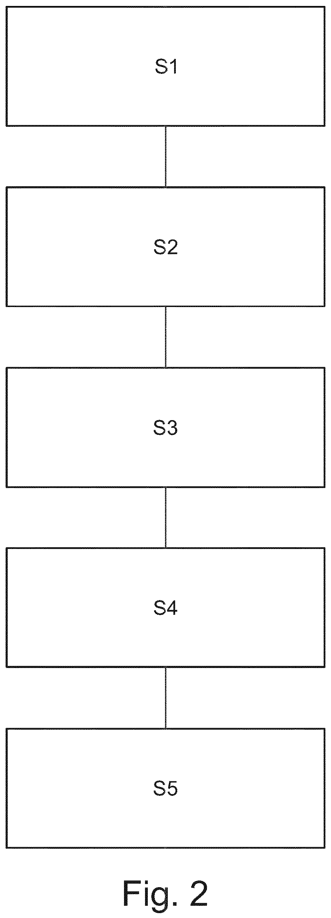

Mit Bezug zu Fig. 2 wird ein Ausführungsbeispiel es Verfahrens erläutert. Dabei wird von dem oben erläuterten Ausführungsbeispiel des Systems ausgegangen, welches wiederum durch die nachfolgenden Erläuterungen näher spezifiziert wird.

Bei dem Ausführungsbeispiel ist vorgesehen, dass das Steuermodul 28 die Ansteuerung des Speichermoduls 22, des Eingabe- und Datensammelmoduls 24 und des Antragsmoduls 26 sowie gegebenenfalls vorhandener Schnittstellen des externen Servers 20 ansteuert.

In einem Schritt S1 wird ein Authentifizierungs- und/oder Identifizierungselement 40, für einen Nutzer erstellt. Bei dem Ausführungsbeispiel beantragt ein Nutzer die Erstellung des Authentifizierungs- und/oder Identifizierungselements 40 mittels des Antragsmoduls 26.

Das Eingabe- und Datensammelmodul 24 erstellt das Authentifizierungs- und/oder Identifizierungselement 40, beziehungsweise es stellt die dazu notwendigen Daten bereit, die dann etwa an einen Kartendrucker übertragen werden, der eine Identifikationskarte erstellt und dem Nutzer zugeordnete Informationen darauf druckt sowie einen Chip mit dem Nutzer zugeordneten Informationen bereitstellt.

Grundsätzlich kann (alternativ oder zusätzlich) aber auch alles volldigital durchgeführt werden, beispielsweise durch den Einsatz einer App, die dann als volldigitale Identifikationskarte dient. Hierzu weist das Eingabe- und Datensammelmodul 24 Schnittstellen auf, mittels derer Daten erfasst werden. Dabei werden dem Nutzer zugeordnete Informationen von dem Speichermodul 22 abgerufen, insbesondere durch einen Zugriff auf eine dort gespeicherte Datenbank. Ferner werden Eingaben eines berechtigten Anwenders erfasst, der sich beispielsweise durch einen Login auf an sich bekannte Weise authentifiziert. Ferner kann auf weitere Datenquellen zugegriffen werden, etwa auf bestimmte Datenbanken, die an anderer Stelle als das Speichermodul 22 gespeichert sind und verwaltet werden.

Bei einem weiteren Ausführungsbeispiel wird im Schritt S1 das Authentifizierungs- und/oder Identifizierungselement 40 nicht neu erstellt, sondern es wurde bereits vorher erstellt und wird nun aktualisiert.

Der Nutzer kann anhand einer durch das Antragsmodul 26 erfassten Eingabe eine Änderung der durch das Speichermodul 22 gespeicherten Daten und/oder des Authentifizierungs- und/oder Identifizierungselements 40 beantragen. Es werden Antragsdaten erstellt und anhand der Antragsdaten wird die Änderung durchgeführt, gegebenenfalls nach einer Betätigung durch eine Genehmigungsstelle, etwa einen berechtigten Anwender.

Ferner ist bei einem Ausführungsbeispiel vorgesehen, dass eine automatische Aktualisierung erfolgt. Bei der Aktualisierung können die durch das Speichermodul 22 gespeicherten Daten und/oder das Authentifizierungs- und/oder Identifizierungselement 40 aktualisiert und/oder geändert werden. Die automatische Aktualisierung kann unterschiedlich ausgeführt werden, beispielsweise in regelmäßigen Zeitintervallen, zu bestimmten Daten, bei bestimmten Ereignissen, nach bestimmten Ereignissen oder nach bestimmten Veranstaltungen. Ferner kann eine automatische Aktualisierung erfolgen, wenn Änderungsdaten von einer externen Einheit bereitgestellt werden, etwa wenn eine Datenbank eine Information darüber bereitstellt, dass dort dem Nutzer zugeordnete Informationen aktualisiert oder geändert wurden.

In einem weiteren Schritt S2 erfasst das Überprüfungsmodul 30 das Authentifizierungs- und/oder Identifizierungselement 40. Hierzu wird bei dem Ausführungsbeispiel ein Bild der Identifikationskarte erfasst und über eine drahtlose Datenübertragung werden durch einen Chip der Identifikationskarte bereitgestellte Informationen ausgelesen.

Die anhand des Authentifizierungs- und/oder Identifizierungselements 40 erfassten Informationen umfassen bei dem Beispiel eine Identifikationsnummer, die dem Nutzer zugeordnet ist.

Ferner kann optional ein Validierungsschritt ausgeführt werden, bei dem auf an sich bekannte Weise eine Echtheitsprüfung der Identifikationskarte und des Authentifizierungs- und/oder Identifizierungselements 40 und/oder der von dieser bereitgestellten Informationen vorgenommen wird, etwa mittels eines kryptografischen Verfahrens.

Bei einem weiteren Ausführungsbeispiel umfasst das Authentifizierungs- und/oder Identifizierungselements 40 ein Anzeigeelement, das auf einer Anzeigefläche ausgeben wird, etwa mittels eines Mobilgeräts des Nutzers. Beispielsweise kann ein Bild oder eine grafische Darstellung ausgegeben werden.

Bei einem weiteren Ausführungsbeispiel umfasst das Authentifizierungs- und/oder Identifizierungselement 40 digital übertragbare Authentifizierungs- und/oder Identifizierungsdaten, die etwa mittels Nahfeldkommunikation (NFC) bereitgestellt werden.

In einem weiteren Schritt S3 werden von dem Überprüfungsmodul 30 Anfragedaten erzeugt und an den externen Server 20 übertragen. Die Anfragedaten werden anhand des erfassten Authentifizierungs- und/oder Identifizierungselements 40 erzeugt.

Die Anfragedaten umfassen bei dem Beispiel Informationen, die von dem Authentifizierungs- und/oder Identifizierungselement 40 erfasst wurden. Zum Beispiel kann dies eine Identifikationsnummer des Nutzers umfassen. Ferner umfassen die Anfragedaten bei dem Beispiel eine mit Bezug zu dem Nutzer zu prüfende Bedingung.

Bei dem Ausführungsbeispiel umfassen die Anfragedaten ferner Informationen über eine bestimmte Kategorie, wobei die Zugehörigkeit des Nutzers zu der Kategorie bestätigt werden soll. Eine positive Bestätigung entspricht dabei einer Authentifizierung des Nutzers, beispielsweise zur Teilnahme an einem sportlichen Wettbewerb. Die Anfragedaten können alternativ oder zusätzlich weitere Merkmale oder Merkmalskategorien betreffen, deren Vorliegen für den Nutzer geprüft werden soll.

In einem weiteren Schritt S4 werden Freigabedaten erzeugt und an das Überprüfungsmodul 30 übertragen. Dies erfolgt bei dem Ausführungsbeispiel durch das Steuermodul 28. Anhand der Anfragedaten wird auf die bei dem Speichermodul 22 gespeicherten Daten zugegriffen und es wird entsprechend den Anfragedaten geprüft, ob ein bestimmtes Merkmals des Nutzers vorliegt.

Die Freigabedaten umfassen bei dem Beispiel eine Information darüber, ob dem Nutzer ein bestimmtes Merkmal zugeordnet ist, wobei dieses überprüfte Merkmal insbesondere durch die Anfragedaten definiert wird.

Bei dem vorliegenden Ausführungsbeispiel ist das Speichermodul 22 zentral ausgebildet und von dem externen Server 20 umfasst. Das heißt insbesondere, dass bei einem Authentifizierungs- und/oder Identifikationsvorgang das jeweils verwendete Überprüfungsmodul 30 eine datentechnische Verbindung zu dem externen Server herstellen muss, um mit diesem Daten auszutauschen.

Bei weiteren Ausführungsbeispielen kann eine dezentrale Ausbildung des Speichermoduls 22 vorgesehen sein. In diesem Fall ist vorgesehen, dass mehrere Speichermodule 22 vorhanden sind, die zumindest teilweise die für eine Authentifizierung und/oder Identifizierung notwendigen Daten speichern und bereitstellen können. Bei einem Ausführungsbeispiel kann das Speichermodul 22 zumindest teilweise von dem Überprüfungsmodul 30 selbst umfasst sein, etwa als interner Speicher des Überprüfungsmoduls 30.

In einem weiteren Schritt S5 wird eine Ausgabe erzeugt und durch das Überprüfungsmodul 30 ausgegeben. Die Ausgabe ist bei dem Ausführungsbeispiel optisch erfassbar und umfasst eine grafisches Anzeige. Diese ist bei dem Beispiel farbig gestaltet. Je nach der angezeigten Farbe kann etwa ein positives oder negatives Ergebnis der Überprüfung angezeigt werden, ob ein bestimmtes Merkmal des Nutzers vorliegt beziehungsweise ob der Nutzer einer bestimmten Gruppe zugeordnet ist oder nicht. Die verwendeten Farben können nach Art einer Ampel grün beziehungsweise rot sein, allerdings können unterschiedliche Farbkombinationen verwendet werden. Ferner kann eine bestimmte Farbe, etwa gelb, ausgegebene werden, wenn das Ergebnis der Überprüfung an Bedingungen geknüpft ist. Beispielsweise kann ein Nutzer unter der Bedingung einer Gruppe zugeordnet sein, wenn eine Zahlung erfolgt oder wenn ein Nachweis für das Erfüllen einer Bedingung vorgelegt wird.

Nachfolgend werden verschiedene Anwendungsfälle für das System und das Verfahren erläutert.

Beispielsweise können die Authentifizierungs- und/oder Identifizierungsdaten 40 medizinische Daten des Nutzers umfassen. So können etwa medizinisch bedingte Einschränkungen und/oder sicherheitsrelevante Daten gespeichert und gegebenenfalls bereitgestellt werden. Denkbar ist beispielsweise bei Verwendung des Systems im Profisportbereich, dass bei entsprechenden medizinischen Diagnosen der Nutzer gesperrt ist und das Authentifizierungs- und/oder Identifizierungselement 40 dieses aktuellen Zustand auch entsprechend mit abbildet und so eine Zulassung des Nutzers zum Event verhindert. Denkbar ist in diesem Zusammenhang z.B. im Motorsportbereich, dass das System die entsprechenden Daten verschlüsselt (z.B. per Blockchain und/oder anderer kryptographischer Methoden abgesichert) vorhält und die medizinische Clearance entweder ermöglicht bzw. mitteilt bei einer Kontrolle, dass der Nutzer aufgrund medizinischer Gründe nicht zugelassen ist.

Beispielsweise kann ein digitales Lizenzierungssystem bereitgestellt werden (Digital Licensing), wie es etwa in den Bereichen Sport, Golf, Leichtathletik und Laufen oder Fußball (etwa mit Spielerpässen) oder im Bereich Jagd, Jagderlaubnis, Jagdlizenz, Waffenbesitz, Sportschützen, oder auch Fischerei, bereits analog durchgeführt wird.

Insbesondere kann ein solches System für den Motorsport implementiert werden, etwa mit einer Computeranwendung, die eine Meldung (etwa Push-Nachricht) erzeugen und ausgeben kann, dass nach dem Fahren einer bestimmten Anzahl weiterer Rennen eine nächste Stufe erreicht wird, etwa "noch 3 Rennen bis zur Stufe International B". Ferner kann eine Einhaltung von Sperren sichergestellt werden.

Ferner kann das System unabhängig von konkreten Sprachen oder für verschiedene Sprachen implementiert werden, sodass Sprachenbarriere überwunden werden. Da dem Authentifizierungs- und/oder Identifizierungselement 40 ein Datensatz zu Grunde liegt, kann dieser standardisiert ausgebildet sein. Denkbar ist in diesem Zusammenhang weiter, dass im System auch eine Übersetzung in mehrere Sprachen vorliegt. Derzeit mit den analogen Lizenzsystemen ergibt sich beispielsweise im Motorsport die Problematik, dass die Datensätze nicht harmonisiert sind, d.h. Lizenzeinstufungen über Landesgrenzen hinweg nicht ohne Weiteres erfolgen können bzw. erst mühsam Übersetzungen und Beglaubigungen beigebracht werden müssen. Das System ermöglicht es nun aufgrund von manipulationssicheren Verfahren (z.B. durch Einsatz von Kryptographie und/oder Blockchain), dass Datensätze entsprechend standardisiert sein können, entsprechende Übersetzungen bereits im System vorgehalten sein können und Beglaubigungen entfallen können. So wird das Sprachen-Problem im Bereich Lizenzen durch standardisierte Einträge mit standardisierter Übersetzung gelöst.

Ein Anwendungsfall des Digital Licensing kann für Rennfahrer oder Teams durchgeführt werden.

Das System kann dabei weitgehend automatisierte Prozess umfassen, etwa eine einmalige Beantragung und Ausstellung des Authentifizierungs- und/oder Identifizierungselements und anschließend automatische Aktualisierung der Daten. Eine Implementierung mittels Computerprogrammen und/oder Apps für Mobilgeräte können eine schnelle Dateneingabe erlauben.

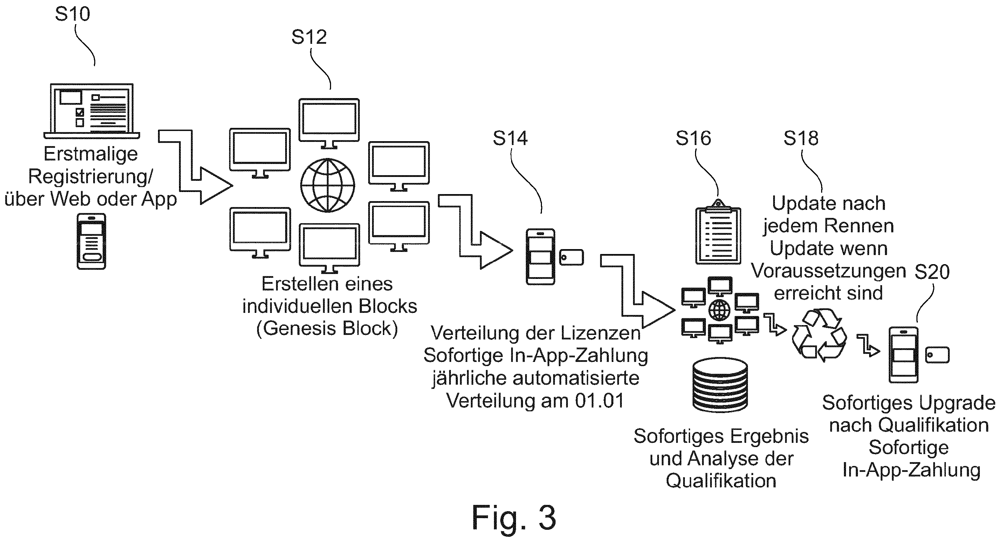

Der Vorgang der Registrierung ist dabei beispielsweise aus Fig. 3 ersichtlich:
Im Schritt S10 erfolgt die Registrierung ("Frist Time Registration / via Web or App"). Hierzu wird im gezeigten Beispiel das Smartphone des Users an eine Registrierungsstation gehalten und mittels NFC der für die (erstmalige) Registrierung notwendige Datenaustausch und Registrierungsprozess gestartet. Dazu ist auch bereits die entsprechende App des Systems 10 auf dem Smartphone installiert.
Im Schritt S12 beginnt der Registrierungsprozess im zentralen Server (sog. Creating individual Block (Genesis Block)). In diesem Schritt wird dann auch das Authentifizierungs- und/oder Identifizierungselement 40 im Mobiltelefon in der App wie der Apple Wallet hinterlegt.
Im Schritt S14 kann dann die jährliche Erneuerung der Lizenz erfolgen ("Distribution of 5 License Instant in App Payment annual automatized distribution").
Im Schritt S16, S18 und S20 wird aufgezeigt, wie im weiteren Zeitlauf die App, aber auch der der zentrale Server, entsprechend aktualisiert wird ("Instant result and qualication analyzing") (= Schritt S16).
Im Schritt S18 wird insgesamt bei neuer Datenlage eine Aktualisierung angestoßen und wenn es ein Upgrade gibt (z.B. neue Qualifikation, Re-Qualifikation, Versicherungserneuerung, Gebührenzahlung, etc.) wird dann auch in Schritt S20 in der App das Lizenzupgrade oder Refreshment (bzw. die Lizenzerneuerung) angestoßen.

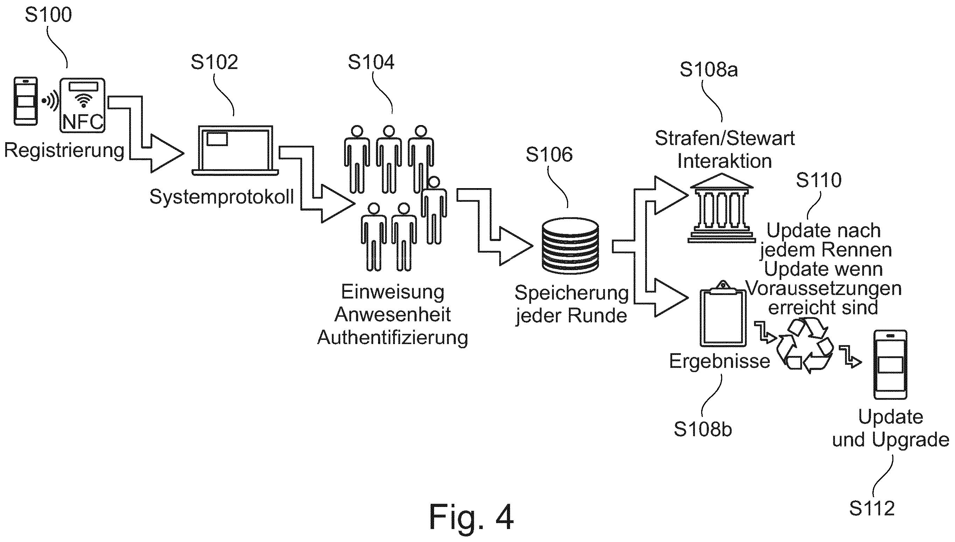

Der Vorgang eines sog. Registration Process (= Registrierung für ein Rennen) bzw. Digital Licensing ist aus **Fig. 4** ersichtlich.

In Schritt S100 erfolgt die Registrierung mittels NFC an einer Registrierungsstation.

Im Schritt S102 wird diese Registrierung verarbeitet (sog. "System Log").

Im Schritt S104 ("Briefing Attendance Authentification") wird mittels des System 10 geprüft, dass der Nutzer an der Fahrerbesprechung teilgenommen hat.

Nach dem Rennstart wird in Schritt S106 jede Runde aufgezeichnet ("Each Lap Storing").

In Schritt S108a werden Strafen und Entscheidungen erfasst ("Penalties/Steward Interaction").

In Schritt S108b werden die Resultate übertragen und eingespeichert.

In Schritt S110 werden überall alle Daten aktualisiert.

In Schritt S112 werden alle Daten entsprechend abgespeichert und hinterlegt ("Update and Upgrade").

Beispielsweise können die erfassten Authentifizierungs- und/oder Identifizierungsdaten Namen, Adressen, Mitgliedschaften in Vereinen oder Gruppen, oder in der Vergangenheit erreichte Resultate umfassen. Sie können ferner medizinische Daten umfassen, gegebenenfalls mit einem Scan und/oder anderen Beleg. Ferner kann eine Karenzzeit für die Nachreichung medizinischer Informationen gefordert und implementiert werden.

Das Speichermodul 22 kann auf verschiedene Weisen ausgebildet sein. Insbesondere ist eine dezentrale "Cloud"-Lösung denkbar. Ferner kann eine Datenbankmigration erfolgen, insbesondere zur Aktualisierung der Daten.

Durch das Eingabe- und Datensammelmodul 24 sowie das Antragsmodul 26 kann ein manueller Zugang ermöglicht werden, etwa anhand einer Anmeldung für einen berechtigten Anwender. Insbesondere kann ein Zugriff über einen Webbrowser oder ein anderes Computerprogramm oder App ermöglicht werden.

Die einen Nutzer zugeordneten Daten können eine Abbildung einer bestehenden Lizenz oder eines anderen Belegs für bestimmte Informationen umfassen.

Ferner kann das Überprüfungsmodul 30 dazu eingerichtet sein, das Authentifizierungs- und/oder Identifizierungselement 40 kontaktlos zu erfassen. Hierdurch kann beispielsweise eine kontaktlose Registrierung und Anmeldung eines Teilnehmers implementiert werden.

Ferner kann eine Authentifizierung und/oder Identifikation anhand biometrischer Daten erfolgen.

Durch die einfache Aktualisierung der Daten bei dem Speichermodul 22 können beispielsweise gleichzeitig allen Nutzern zu Jahresbeginn die jeweiligen Lizenzen des vergangenen Jahres zugeordnet werden.

Es kann ein Bezahlsystem vorgesehen sein, wobei Bezahlereignisse gespeichert und zum Prüfen der Authentifizierung und/oder Identifikation sowie zum Erzeugen der Freigabe berücksichtigt werden. Dabei kann auch ein Verkauf einer Versicherung und vergleichbare Produkte implementiert werden.

Um die Integrität medizinischer Daten sicherzustellen, kann vorgesehen sein, dass ein ärztlicher Beleg oder ein anderes Attest bereitgestellt wird. Ferner kann eine definierte Karenzzeit vorgesehen sein.

Das System kann ferner zur Anmeldung im Vorfeld einer Veranstaltung genutzt werden, um eine Teilnahmeberechtigung zu ermitteln. Dabei können die Daten des Speichermoduls 22 zur Vereinfachung der Anmeldung genutzt werden, insbesondere mittels einer App oder andren Computeranwendung.

Die Authentifizierungs- und/oder Identifizierungsdaten können Informationen über eine Abnahme umfassen.

Das Überprüfungsmodul 30 kann das Authentifizierungs- und/oder Identifizierungselement 40 per Nahfeldkommunikation (NFC) erfassen, etwa indem ein Mobilgerät des Nutzers an ein Lesegerät gehalten und ein Lesevorgang durchgeführt wird.

Das Eingabe- und Datensammelmodul 24 oder ein anderes Element kann mit einem Zeitnahmesystem, einem System zum Scoring und/oder einer Datenbank zur Bereitstellung von Wettbewerbsdaten verbunden sein und insbesondere automatische Aktualisierungen des Speichermoduls 22 anhand der bereitgestellten Daten ausführen.

Zum Beispiel kann ein System bei einem sportlichen Rennen Daten von jeder Runde oder jeden Durchlauf erfassen und mit dem Fahrer verknüpft speichern. Ferner können Ergebnisse verschiedener sportlicher Ereignisse und/oder Leistungsdaten gespeichert und aktualisiert werden.

Der Nutzer kann auf die Daten zugreifen und beispielsweise als Fahrer seine Rundenzeiten und Auswertungen sowie gespeicherte sportliche Leistungen und Leistungsdaten abrufen. Denkbar ist, dass diese Funktionalität kostenpflichtig nutzbar ist, z.B. per In-App-Kauf oder entsprechendes Abonnement.

Bei Erreichen einer neuen Lizenzstufe, insbesondere nachdem der Nutzer bestimmte Bedingungen erfüllt hat, kann eine Anzeige ausgegeben werden, die auf Möglichkeiten der neuen Lizenzstufe, gegebenenfalls Cross-Selling und/oder einen Starterplatzverkauf hinweist. Jeglicher Kauf kann vom User auch abgelehnt werden. Der User hat in einer möglichen Ausführungsform auch die Möglichkeit, die Lizenzstufe nach unten zu korrigieren. Denkbar ist beispielsweise, dass aus Kostengründen die Lizenz nach unten korrigiert wird, z.B. weil bereits klar ist, dass sie nicht benötigt wird. Jedoch wird grundsätzlich sichergestellt, dass der User die Lizenz niemals selbständig nach oben korrigiert, es sei denn, dass das System in dazu legitimiert, weil er die jeweiligen Qualifikationen erreicht hat, immer in Betracht der Verjährung.

Der Nutzer kann bereits im Vorfeld erkennen, welche Voraussetzungen er für die nächste Klasse erfüllen muss, insbesondere mit Hinweise darauf, wie diese Voraussetzungen erfüllt werden können, etwa durch Ausgabe einer entsprechenden Rennauswahl.

Es kann ein Sofortkauf der neuen Lizenz angeboten werden, sobald die Berechtigung dazu vorliegt. Gegebenenfalls kann eine automatische Zahlung vorgesehen sein, etwa via hinterlegter Kreditkarte, Paypal oder automatischen Abbuchungauftrag.

Vorliegende Genehmigungen, Lizenzen oder Zulassungen (Permits), etwa eine Nordschleifenpermit, können dem Nutzer ausgegeben werden, etwa in einer App. Ferner können Zertifikate in die App geladen werden, insbesondere um die Daten des Speichermoduls 22 zu ergänzen oder zu aktualisieren. Es kann eine Freigabe eines Kursleiters vorausgesetzt.

Es können automatisch Kriterien geprüft werden, die von einem Verband, etwa der FIA, vorgegeben werden.

Beispielsweise kann für Werksfahrer, Profisportler oder ab gewissen Qualifikationslevel eine unabhängige Partei die Daten eingeben und der Nutzer kann diese Eingaben bestätigen, insbesondere ein Rennfahrer. Denkbar ist in diesem Zusammenhang, dass fahrerische Einstufungen nur für bestimmte Rennserien gelten und gesondert gegen Bezahlung beantragt werden müssen.

Das System kann eine manuelle selektive Prüfung von Anträgen und/oder Lizenzen ermöglichen.

Dem Nutzer können Anzeigen zu einem Marketing ausgegeben werden und es können Möglichkeiten implementiert werden, mit dem Nutzer, etwa einem Fahrer oder anderen Sportler in Kontakt zu treten. Es kann Werbung oder eine Nachricht ausgegeben werden.

Es können Anmeldungen zu bestimmten Ereignissen, etwa Rennen oder Veranstaltungen, für den Nutzer durch einen durch Promoter oder Organisator vorgenommen werden.

An den Renntagen bzw. am Rennwochenende kann das System eingesetzt werden, um die Einschreibung ins Rennen inkl. des Checks der medizinischen Daten zu vereinfachen. Die Abnahme kann entsprechend direkt mit dem System erfolgen, beispielsweise durch entsprechende Kontrollen des Authentifizierungs- und/oder Identifizierungselements 40, verbunden ggf. mit biometrischen Kontrollen, vergleichbar eines automatischen Passkontrollsystems am Flughafen. Denkbar ist auch, dass das Authentifizierungs- und/oder Identifizierungselement 40 im Mobiltelefon in einer App wie der Apple Wallet hinterlegt ist. Hier wird dann z.B. per App ein Hashwert mit einem entsprechende Lesegerät ausgetauscht oder eine Verbindung per NFC oder RFID oder Bluetooth für das Auslesen und den Check aufgebaut. Dies kann auch für die Anwesenheitskontrolle bei Fahrerbriefing bzw. der Fahrerbesprechung und der Sicherheitseinweisung verwendet werden.

Für manche Länder (z.B. Japan oderUSA) benötigt man eine spezielle Genehmigung seitens des eigenen ASN's. Diese soll auch nach Beantragung und Bezahlung auf die Lizenz im hinterlegt werden können. Dies kann auch erweitert auf entsprechende Superlizenzen, Veranstalterlizenzen oder spezielle Lizenzen für Veranstaltungsorte oder Veranstaltungsserien (z.B. Nordschleifenpermit DMSB, Superlizenz Formel 1, Speziallizenz für Sonderrennveranstaltungen etc.).

Außerdem kann das Authentifizierungs- und/oder Identifizierungselement 40 mit dem offiziellen Zeitnahmesystem und dem Scoring und den Wettbewerbsdaten verknüpft sein. Denkbar ist in diesem Zusammenhang, dass die Daten von jeder Runde aufgenommen werden können und mit dem Fahrer bzw. der Fahrerin verknüpft werden können. Dabei können weiter sportliche Daten und Handlungen wie Überholmanöver, schnellste Runden, Rundenrekorde, aber auch Strafen oder sonstige Leistungsdaten erfasst werden.

Dies ermöglicht es auch, dass sich der Fahrer bzw. die Fahrerin die Rundenzeiten bzw. auch Auswertungen (Vergleich mit eigenen Daten, aber auch Vergleich mit anderen Teilnehmern) ansehen kann.

Die Erfassung von Strafen von Verwarnung (Punktesystem) bis Lizenzentzug oderSperre muss vor Ort von offizieller Seite (wie ASN/FIA) möglich sein. Dazumeist die Strafen unter Vorbehalt ausgesprochen werden und Einspruch eingelegt werden kann, müssen diese auch wieder temporär entfernt werden können.

Das Ergebnis ist unmittelbar nach dem Rennen inoffiziell und zwar bis zum Ablauf der Protestfrist, erst danach wird das Ergebnis offiziell und damit verbindlich. Diese Umstellung von inoffiziell auf offizielles Ergebnis soll im System automatisch erfolgen. Grundsätzlich muss es aber auch möglich sein, dass die Datenerfassung und Datenaktualisierung unterbrochen werden kann, wenn es zu einem Protest kommt und dieser noch geklärt werden muss. Dieser Status kann ebenfalls angezeigt werden.. Des Weiteren wird in diesem Fall durch das System das Ergebnis auf Antrag des Sportgerichtes / ASN / Gericht korrigiert bzw. kann die Korrektur auch manuell durch z.B. ASN oder Gericht in das System eingespielt werden (nicht aber durch den User selbst.

Da im Motorsport die Lizenzstufen auch an das Erreichen von sportlichen Erfolgen geknüpft sind, kann durch das System das Erreichen einer neuen Lizenzstufe entsprechend angekündigt bzw. angezeigt werden. Die neue Lizenzstufe bzw. Lizenz kann direkt dann zum Erwerb angeboten werden, wenn die notwendigen Voraussetzungen erfüllt sind. Denkbar ist, dass die entsprechende Gebühr hierfür direkt per Software auf einem mobilen Endgerät (sog. App) und entsprechendem elektronischem Bezahlsystem (z.B. ApplePay, Kreditkarte, PayPal, Bezahldienstleister wie Stripe, Tencent WeChat (WePay), Alipay etc.) bezahlt werden kann. Es kann vorgesehen sein, dass die Lizenz nicht direkt erworben werden muss und zum Erwerb entsprechend vorgehalten wird (Bereitstellung einer Lizenzoption).

Die App kann es auch ermöglichen, dass entsprechende Permits (d.h. Sonderlizenzen) in der App sichtbar sind, wie beispielsweise die Nordschleifenpermit (DSMB-Permit Nordschleife (DPN)). Dies gilt auch für Zertifikate oder entsprechende Lehrgangsnachweise. Denkbar ist, dass hierfür den Kursleitern entsprechende Uploadmöglichkeiten ins System zustehen bzw. nach Absolvieren eines Lehrgangs die Lehrgangsdaten hochgeladen werden.

Außerdem ist es denkbar, dass die Einstufung des Fahrers entsprechend angezeigt werden kann. Hierzu kann vorgesehen sein, dass von den Automobilsportverbänden entsprechende bzw. vorgegebene Kriterien vom System bereits implementiert sind und automatisch geprüft werden. Ab einem gewissen Level an Erfahrung z.B. für Profisportler bzw. Werksfahrer muss eine unabhängige Partei die Daten eingeben und die Daten können dann beispielsweise vom Nutzer bestätigt werden.

Das System 10 kann aus Sicht eines nationalen, aber auch internationalen Motorsportverbandes bzw. eines Eventorganisators wie folgt genutzt werden:
Die Lizenzabteilung kann das System 10 nutzen, um Fragen im Lizenzbereich (z.B. bei landesgrenzüberschreitenden Sachverhalten oder nicht harmonisierten Sachverhalten zu klären). Denkbar ist aber auch, dass derartige Probleme auf der Ebene eines Superusers geklärt werden können. Grundsätzlich kann Verbänden bzw. Eventorganisatoren es ermöglicht werden, dass eine selektive Prüfung und auch Gewährung von Anträgen bzw. Lizenzen ermöglicht wird.

Über das System kann es auch z.B. per Instant-Messaging die Möglichkeit geben, dass Lizenzgeber und Lizenznehmer direkt miteinander kommunizieren und Daten austauschen können.

In diesem Zusammenhang ist auch denkbar, dass Veranstaltungen wie Rennveranstaltungen, Testveranstaltungen, Trackdays oder dergleichen den Nutzern über das System direkt mitgeteilt werden. Eine Anmeldung kann dann direkt über das System erfolgen.

Das System 10 kann darüber hinaus auch genutzt werden, um Rennen und Veranstaltungen zentral zu verwalten und/oder anzumelden. Dies ist insbesondere für ASN-Übergreifende Promotoren bzw. Veranstalter von Vorteil (ASN = Autorité Sportive Nationale). Denkbar wäre beispielsweise, dass die Daten eingespielt werden und über das System auch dem Internationalen Motorsportverband FIA gemeldet werden. Hierzu kann ein gesondertes Eventorganisationsmodul vorgesehen sein, das nur ASNs und/oder Promotern und/oder Veranstaltern zur Verfügung gestellt wird bzw. zu dem nur ASNs Zugang haben. Hier kann weitervorgesehen sein, dass Eventorganisationsmodul direkt mit dem Speichermodul in Verbindung steht und somit abgleichen kann, welche Authentifizierungs- und/oder Identifizierungselemente die entsprechende Qualifikation bzw. Lizenzierungsebene haben, um an dem Event teilzunehmen. Die entsprechend qualifizierten Teilnehmer können so direkt angesprochen und zur Einschreibung für das Event angeschrieben werden.

Der ASN ist aber in der Regel kein Promoter bzw. Veranstalter. Der ASN dient als Dachverband und Sanktionierende Einheit für die jeweiligen Rennen, so gibt es z.B. bei Rennen in Deutschland ohne DMSB keine offizielle Genehmigung oder bei z.B. Formel Rennen wie der Formel 1 oder Formel 2 oder Formel 3ohne die Beteiligung und Aufsicht der FIA. Dies wird durch das System auch entsprechend abgebildet und die ASN oder Dachorganisationen wie DSMB oder FIA müssen das Eventorganisationsmodul den Promotern und/oderRennorganisatoren und/oder Rennveranstaltern zu Verfügung stellen.

Über das System 10 können die Veranstalter auch die Lizenzprüfung der Teilnehmer am Rennen überprüfen, z.B. durch Check per RFID oder NFC der Authentifizierungs- und/oder Identifizierungselemente 40. Auch die Abnahme und Überprüfung von Sperren und auch der obligatorische Medical Check kann so erfolgen.

Während der Veranstaltung erzielte Rundenzeiten und Positionen getrackt werden. Denkbar ist in diesem Zusammenhang, dass das Authentifizierungs- und/oder Identifizierungselement 40 mit einem GPS-Modul oder einer anderen Location-Based-Service-Application (LBS- Application) kombiniert ist. Entweder weist das Authentifizierungs- und/oder Identifizierungselement 40 dies auf oder steht mit einem solchen Modul in Verbindung.

Auch bei Rennen mit mehreren Fahrern auf einem Auto (wie beispielsweise einem Langstreckenrennen) kann das System eine Fahrererkennungsfunktion aufweisen. Die Rennkontrolle überwacht beispielsweise ohnehin die gerade aktiven Fahrer und kann diese Information entsprechend ins System einspielen.

Das System 10 kann auch so eingerichtet sein, dass die Zeitnahme in Echtzeit, d.h. rundengenaue Zeiten und Positionen an der ASNs, die Datenspeicher (z.B. eine Cloud) von FIA oder des Veranstalters übermittelt. Auch detailgenaue Leistungsdaten und Positionen können an die Datenspeicher von Dachverband oder Weltverband oder einer übergeordneten Organisation verschickt werden.

Der Vorteil ist, dass so die vorläufigen Ergebnisse direkt nach dem Rennen vorliegen und auch bereits mit dem Authentifizierungs- und/oder Identifizierungselement 40 im System 10 verknüpft werden können. Denkbar ist weiter, dass über ein Disput-Modul des Systems 10 durch den Nutzer die Resultate angefochten werden können. Das Resultat muss offiziell gestellt werden bzw. wird automatisch auf offiziell gestellt, wenn kein Disput erfolgt.

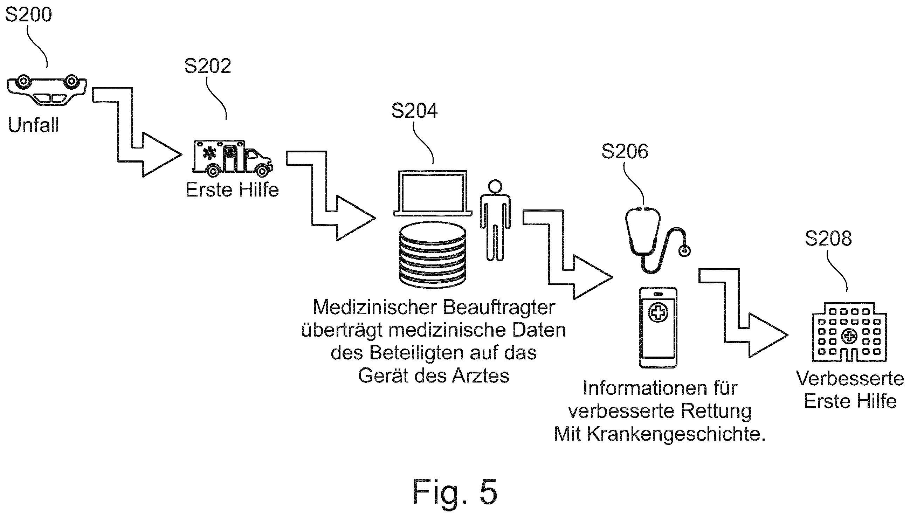

Im Falle eines Unfalls bzw. medizinischen Notfalls ergibt sich durch den Einsatz des Systems 10 sowie des Authentifizierungs- und/oder Identifizierungselements 40 folgende Einsatzmöglichkeit, wie in Fig. 5 näher dargestellt:
Im Schritt es S200 ist es zu einem Unfallgeschehen ("Accident") gekommen.

Dies wird unmittelbar auch erkannt und gemeldet und im nächsten Schritt S202 - z.B. bei einem Renngeschehen oder einer sonstigen Sportveranstaltung durch die Veranstalter (Medical Delegate, Racecontrol, Stadionbetreiber, Medizinische Aufsicht etc.) alarmiert - das medizinische Notfallperson zur Ersten Hilfe und Notfallversorgung zur Unfallstelle bzw. zur verunfallten Person geschickt.

Im gezeigten Beispiel schickt der Medical Delegate im Schritt S204 die medizinischen Daten des verunfallten Teilnehmers auf das mobile Endgerät (z.B. Smartphone oder sonstige mobile Endgeräte) des Arztes oder Sanitätspersonals.

Unter Einsatz des System 10 wird in Schritt S206 durch den Arzt oder das Sanitätspersonal die Information betreffend die verunfallte Person bereitgestellt, so insbesondere Sprachkenntnisse der verunfallten Person, Vorerkrankungen oder dergleichen. Grundsätzlich ist aber auch denkbar, dass der Schritt S202 bereits so beeinflusst wird, dass aufgrund der Daten der verunfallten Person bereits - soweit verfügbar - Erste-Hilfe-Personal mit entsprechenden Sprachkenntnissen oder auch entsprechendem Sonderequipment (um ggf. auf Vorerkrankungen reagieren zu können) losgeschickt wird.

Die Schritte S204 und S206 könnten auch so ablaufen, dass diese bei der Alarmierung im Schritt S202 schon stattfinden, also die Schritte S202, S204 und S206 zeitgleich bzw. kombiniert ablaufen.

Im Ergebnis kann im Schritt S208 eine deutlich verbesserte, weil auf mehr Informationen basierende Erste Hilfe bereitgestellt und geleistet werden.

Das medizinische Personal hat insbesondere die Möglichkeit, über RFID oder NFC (z.B. durch Auslesen von Informationen eines Codes oder der App der verunfallten Person) oder bereits über eine eigene App in Schritt S206 personenbezogene Daten zu erhalten. Diese können entsprechende Informationen zu Vorerkrankungen, zur Patentientenhistorie, zur Blutgruppe oder auch einfach zur Sprache bzw. den Sprachkenntnissen des verunfallten Nutzers (z.B. in welcher Sprache muss der Patient angesprochen werden?) enthalten.

Hier soll die erste Versorgung am Unfallort optimiert werden. Bei jeder Rennsportveranstaltung muss je nach Gefährdungspotential eine angemessene medizinische Versorgung und insbesondere angemessene medizinische Notfallversorgung gewährleistet sein. Hier kann das System sehr gewinnbringend eingesetzt werden. Denkbar ist insbesondere, dass ein Offizieller der ASN, z.B. des DMSB's oder der FIA oder eine sonstige entsprechend beauftragte und autorisierte Person oder ein entsprechender Personenkreis, Befugnis hat, auf das System und die medizinischen Daten z.B. der Fahrer zuzugreifen. Imim Falle eines Unfallgeschehens wird dem Notarzt und den Sanitätern, der bzw. die sich auf dem Weg befindet/n zur Unfallstelle, die Daten des Verunfallten Fahrers (Name, Sprache (zum Ansprechen), Blutgruppe, Unfallhistorie (soviel wie möglich, z.B. bekannte Wirbelverletzungen etc.)), mitgeteilt, damit die erste Hilfe vor Ort Optimiert werden kann. Hier soll im Idealfall auf die Krankenakte zugegriffen werden, alternativ neben den Angaben des Medical Check der Fahrer im eigenen Interesse möglichst viele Angaben selber machen. Der Medical Delegate (z.B. beim DSMB ein DSMB Offizieller) muss auch die Befugnis haben nach Schriftlicher Bestätigung des Arztes die Freigabe des Fahrers bei diese Veranstaltung und drüber hinaus zu entziehen, bis zu einer Untersuchung in der der Fahrer wieder als Renntauglich deklariert wird.

Die Daten werden ins System geladen für die jeweilige Veranstaltung bei der Registrierung per App (NFC oder Barcode) und stellt damit die sogenannte Papierabnahme dar, die vor dem Start der Veranstaltung stattfindet.

Auch Strafen aus dem Renngeschehen können direkt ins System 10 eingegeben werden. Dies kann beispielsweise über entsprechende Zugänge für die Race Control bzw. Schiedsrichter erfolgen. Hierzu kann ein gesondertes trusted-referee-input Modul vorgesehen sein. Zusammengefasst lässt sich die derzeitige Situation und die durch die Erfindung zu erzielende Verbesserung wie folgt beschreiben:
Das erfindungsgemäße Digitale Licensing unter Verwendung des erfindungsgemäßen Authentifizierungs- und/oder Identifizierungssystems 10 zum Authentifizieren und/oder Identifizieren eines Nutzers ist ein Produkt welches das gesamte Lizenzwesen im Sport (Amateur / Profi) - und darüber hinaus - digitalisieren soll. Basierend auf einer eigens dafür entwickelten Blockchain bzw. Distributed Ledger Technologie soll bzw. wird dieses System in Zukunft die ganzen Abläufe kontaktlos und in Echtzeit ermöglichen.

Ist Stand:
In der heutigen Zeit wird das Lizenzwesen fast aller Sportverbände noch in Papierform abgewickelt. Anträge für Lizenzen müssen heute noch vielfach in Papierform (alternativ auch teilweise über das Web) eingereicht werden. Dieser Prozess ist sehr aufwendig, zeit- und personalintensiv. Die Zahlung der Lizenz erfolgt vielfach erst nach Rechnungserhalt. Im Web ist meist auch Zahlung per Kreditkarte möglich. Jedoch müssen weiterhin einige Dokumente in Original eingereicht werden (bspw. eine medizinische Untersuchung).

Des Weiteren ist der Ablauf der jeweiligen Sportveranstaltungen antiquiert, fordert viel Papierarbeit und ist mit sehr viel Aufwand verbunden. Dieser gesamte Prozess des Nennens bis hin zur Lizenzkontrolle, die Übermittlung der Ergebnisse und die daraus folgende Datengenerierung und Verwertung für Datenbanken oder -analyse, soll in das System integriert werden. Der End User soll seine gesamte Lizenz- und Veranstaltungs-Verwaltung über eine App steuern können.

Als letzten Punkt ist der Informationsfluss für Medizinische Erste Hilfe vor Ort (speziell bei Autorennen oder Fahrradrennen - siehe Fig. 5) bisher noch nicht optimiert worden. Dieses Feld liegt komplett brach, medizinische Eignungstests dienen meist nur der rechtlichen Absicherung der Verbände.

Soll Stand bzw. erfindungsgemäßer Einsatz des Systems 10:
Das Produkt Digital Licensing soll wie schon erwähnt basierend auf der Distributed Ledger Technologie / Blockchain das gesamte Lizenzwesen digitalisieren, automatisieren und kontaktlos revolutionieren.

Der gesamte Prozess soll als Blockchain bzw. DLT aufgelegt werden. Da global die gesamten Verbände des jeweiligen Sports (DMSB, DFB etc) sowie die jeweiligen Dachverbände (FIA, FIFA etc) als Host zur Verfügung, kann ein dezentrales System eigens dafür entwickelt werden (dies gilt für jede einzelne Sportart).

Der gesamte Prozess soll wie folgt automatisiert werden: Die User bekommen eine App zu Verfügung gestellt mit ihren jeweiligen Berechtigungen und Informationen (Stand), um damit ihre Lizenz sowie Sportveranstaltungen selbst verwalten zu können.

Dies fängt mit dem Beantragen der Lizenz (bzw. der ersten Anmeldung) an (vgl. Fig. 3). Der weitere folgende Prozess wird automatisch stattfinden. In den meisten Sportarten hat die Lizenz eine Gültigkeit vom 01.01. - 31.12 (Beginn Kalenderjahr bis Ende Kalenderjahr), mit dem Digital Licensing System soll die Lizenz jeweils Automatisch am 01.01 dem User zu Verfügung gestellt werden (stand heute muss der User diese jedes Jahr selber beantragen in einem aufwendigen Prozess). Des Weiteren gibt es in vielen Sportarten verschieden Stufen von Lizenzen, mit den jeweiligen Berechtigungen (z.B. Motorsport Lizenz Nat D,C,B, A, Int C,B, A die vom DMSB ausgegeben werden). Wir können hier auch das Handicap im Golfsport als Beispiel nehmen. Das Erreichen einer höheren Stufe oder eines besseren Handicaps ist ein Schlüssel basierend aus vielen verschiedenen Faktoren zu dem auch unter anderem Ergebnisse gehören, die im System live verarbeitete werden. Diese komplexen Bedingungen, die sich in verschiedenen Sportarten unterscheiden werden vom System automatisch verarbeitet und geprüft, so dass beim Erreichen der User sofort die neue Stufe bekommt. Dies muss er Stand heute selber nachweisen und manuell beantragen.

Der User wird sich mit dem Digital Licensing Tool neben der Verwaltung der Lizenz auch bei den sanktionierten Events einschreiben können, die dort gelistet werden. Vor Ort wird er den Dokumentencheck in Zukunft kontaktlos über NFC / Bluetooth / QR Code Technologie durchführen können. Die Überprüfung von anwesenheitspflichtigen Besprechungen (die heute per Unterschrift bestätigt wird) soll per Identifikationsnummer über das Handy per BLE (Bluetooth Low Energy) - ähnlich des Corona Apps - kontaktlos durchgeführt werden, dies funktioniert besonders gut bei Großevents.

Über diese Funktion hinaus werden nach der Registrierung bei der jeweiligen Veranstaltung alle Ergebnisse gesammelt und im System verarbeitet. Im Motorsport wird jede Rundenzeit und im Golf jeder Schlag gespeichert, um die nötigen Informationen für die Lizenzen (Stufen / Handicap) verarbeiten zu können. Des Weiteren sollen hieraus Daten an Datenbanken fließen, sowie ein Analysetool den Usern (Sportlern, Trainern, Sponsoren etc.) zu Verfügung gestellt werden. In den Lizenzinformationen des Users sollen auch Gesundheitsdaten / Unfallhistorien und weitere Informationen abgespeichert werden um die medizinische Erste Hilfe Versorgung vor Ort zu optimieren. Dies betrifft speziell Sportarten wie Motorsport, Radsport oder der Skisport wo der verunfallte sofort identifizierbar ist.

Im Falle eines Unfalls soll der sich auf dem Weg befindende Notarzt mit den nötigen Informationen des Fahrers versorgt werden um eine bestmögliche medizinische Erstversorgung vor Ort vornehmen zu könne. Hierzu gehören zum Beispiel die Information: Ansprache des Fahrers (bei Internationalen Events), welche Sprache spricht er, Blutgruppe, Allergien, Unfall-/ Verletzungshistorie (bspw. muss jemand der schon einmal einen Wirbelbruch hatte auch bei einer vermeintlich leichten Unfallsituation mit erhöhter Vorsicht geborgen werden). Diese Informationen sollen in Zukunft automatisch Integriert und upgedatet werden. Des Weiteren sollen die Jährlichen Medical Checks von dem zuständigen Arzt an den Verband direkt übermittelt werden, so dass dies Papierlos geschehen kann, diese Daten sind in der Blockchain entsprechend kryptographisch gesichert.

Vor Ort soll das System auch dazu genutzt werden, dass Master User (bspw.Sportkommissare) Strafen bis hin zum Lizenzentzug aktivieren können. Insbesondere im Bereich Authentifizierung wollen wir den gesamten aktuellen Stand der Technik nutzen. Dies umfasst biometrischen Verfahren (Fingerabdruck, Gesichtserkennung) inklusive Retina Scan.

Zahlreiche Funktionen des Systems (Lizenzen beantragen, Lizenz-Upgrades, Einschreiben bei Veranstaltungen) erfordern ebenfalls eine Bezahlfunktion. Die soll über verschieden inApp Payments stattfinden, so dass hier eine beschleunigte Zahlung stattfindet. Hier wird der Globale Markt betrachtet (Kreditkarten, PayPal, Stripe, WeChat und Alipay).

Abschließend wird das System das momentane Lizenzwesen komplett ersetzen und automatisieren, was zu einer hören Effizienz und Transparenz führt. Die Sportbehörden benötigen für die Lizenzabteilungen weitaus weniger Personal, die Fehlerhäufigkeit oder auch der Betrug wird komplett eliminiert. Die Sportbehörden bekommen verlässliche Daten, können sogar basieren darauf wirtschaftliche Vorhersagen treffen (jede höhere Lizenzstufe kostet üblicherweise mehr Geld). Durch das System wird es einen schnelleren Geldeingang geben. Des Weiteren sparen die Sportbehörden Kosten für Plastikkarten und die dazugehörige Logistik.

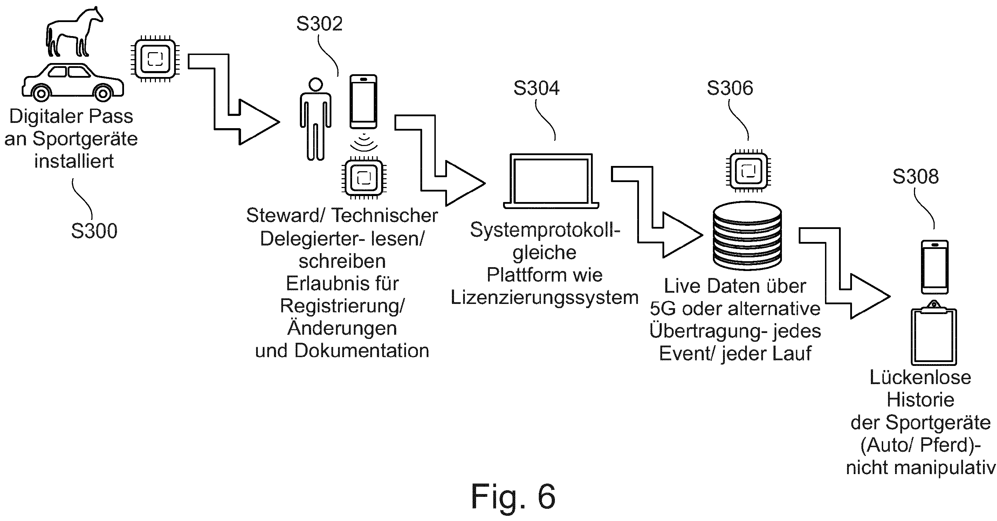

Im Falle einer Implementierung eines digitalen bzw. elektronischen Sportausrüstungs- bzw. Sportgerätepasses ergibt sich durch den Einsatz des Systems 10 sowie des Authentifizierungs- und/oder Identifizierungselements 40 folgende Einsatzmöglichkeit, wie in Fig. 6 näher dargestellt:
In Schritt S300 geht es zunächst darum, ein Sportgerät z.B. in Form eines Rennwagens bereitzustellen bzw. für die Authenfizierung und Identifizierung auszuwählen und bereitzustellen (oder vergleichbar im Pferdesport ein Pferd entsprechend für die Authentifizierung und Identifizierung auszuwählen und bereitzustellen) oder eine Sportausrüstung (z.B. ein Sattel für ein Pferd) oder, was normalerweise zu Beginn einer Sportveranstaltung erfolgt.

Das Authentifizierungs- und/oder Identifizierungselement 40 ist vorzugsweise als sogenannter digitaler bzw. elektronischer Kraftfahrzeugpass (wird im Rennsport auch Wagenpass genannt) für einen Rennwagen ausgebildet und an diesem angebracht (z.B. durch eine versteckte oder irreversible Befestigung) und wird anhand des Systems 10 implementiert.

Innerhalb dieses digitalen Wagenpasses können sogenannte Wagenpassdaten wie Fahrzeughalterdaten, Fahrzeugdaten, Homologationsdaten, Fahrzeugveränderungen bzw. historische und aktuelle Telemtetriedaten usw. hinterlegt und eingespeichert sein. Diese Daten können mit denen des Sportlers (Fahrers) verknüpft werden.

Vergleichbar kann das entsprechend im Pferdesport erfolgen.

In Schritt S302 erfolgt sodann die Registrierung z.B. mittels NFC oder anderen drahtlosen Verbindungslösungen (wie vorstehend bereits erläutert) mittels eines Registrierungsgerätes (das als mobiles Endgerät ausgebildet sein kann) einer technischen und/oder amtlichen Sport-Aufsichtsbehörde (z.B. die FIA).

In Schritt S302 werden insbesondere die digitalen Wagenpassdaten ausgelesen, so dass diese als Basis für die Registrierung dienen.

Zudem können in Schritt 302 auch Schreibvorgänge innerhalb des Wagenpasses durch das Registrierungsgerät vorgenommen werden, beispielsweise in Form einer genehmigten bzw. erfolgreichen Registrierung, was zur Dokumentation in dem Wagenpass automatisch hinterlegt wird.

Im Schritt S304 wird diese Registrierung durch das System 10 weiterverarbeitet (sog. "System Log"), wie bereits vorstehend beschrieben wurde.

Im Schritt S306 wird nach dem Rennstart des Fahrzeugs (oder z.B. eines Rennpferdes) anhand jeder Runde aufgezeichnet und mittels Echtzeit-Daten des Fahrzeugs wie z.B. Telemetrie-Daten, Zeitnahme, Fahrerdaten ("Live-Data") im Wagenpass bzw. Sportausrüstungspass eingespeichert bzw. hinterlegt.

Sodann werden zusätzlich gemäß Schritt 308 mittels drahtloser Verbindung (z.B. mittels 5G oder anderen Verbindungen wie vorstehend beschrieben) diese Echtzeitdaten an ein weiteres Endgerät (bevorzugt verschlüsselt wie vorstehend beschrieben) an ein weiteres Endgerät übertragen.

Dieses Endgerät kann jenes aus Schritt 304 sein, wobei es sich auch um ein zusätzliches Endgerät, z.B. ein mobiles Endgerät des Fahrzeugeigentümers oder Zuschauers, handeln kann. Hier können in den jeweiligen Apps, ein Fanengagement durch Augmented Reality verbessert werden.

Hier soll die Registrierung eines Rennfahrzeugs aber auch dessen Historie (gefahrene Rennrunden, Rennstatistiken, Unfälle, Fahrer usw.) optimiert werden und eine lückenlose und fälschungssichere Bereitstellung der Wagenpassdaten gewährleistet werden. Denkbar ist insbesondere, dass ein Offizieller der ASN, z.B. des DMSB's oder der FIA oder eine sonstige entsprechend beauftragte und autorisierte Person oder ein entsprechender Personenkreis, Befugnis hat, auf das System und die Wagenpassdaten zuzugreifen, um widersprüchliche Angaben zu den Wagenpassdaten möglichst zu vermeiden.

Im Reitsport, sollen die jeweiligen Grunddaten zu dem Pferd ebenso abgespeichert werden darüber hinaus sollen die zertifizierten Veterinäre ebenso einen Schreibberechtigungen bekommen um medizinische Daten sowie auch Impfungen hinterlegen zu können.

Auch Strafen aus dem Renngeschehen können direkt ins System 10 bzw. in den Wagenpass eingegeben werden. Dies kann beispielsweise über entsprechende Zugänge für die Race Control bzw. Schiedsrichter erfolgen. Hierzu kann ein gesondertes trusted-referee-input Modul vorgesehen sein. Zusammengefasst lässt sich die derzeitige Situation und die durch die Erfindung zu erzielende Verbesserung wie folgt beschreiben:
Das erfindungsgemäße Digitale Licensing unter Verwendung des erfindungsgemäßen Authentifizierungs- und/oder Identifizierungssystems 10 zum Authentifizieren und/oder Identifizieren eines Nutzers ist ein Produkt welches, wie im Zusammenhang mit Fig. 6 beschrieben, das gesamte Lizenzwesen im Sport (Amateur / Profi) - und darüber hinaus - digitalisieren soll. Basierend auf einer eigens dafür entwickelten Blockchain bzw. Distributed Ledger Technologie soll bzw. wird dieses System in Zukunft die ganzen Abläufe kontaktlos und in Echtzeit ermöglichen.

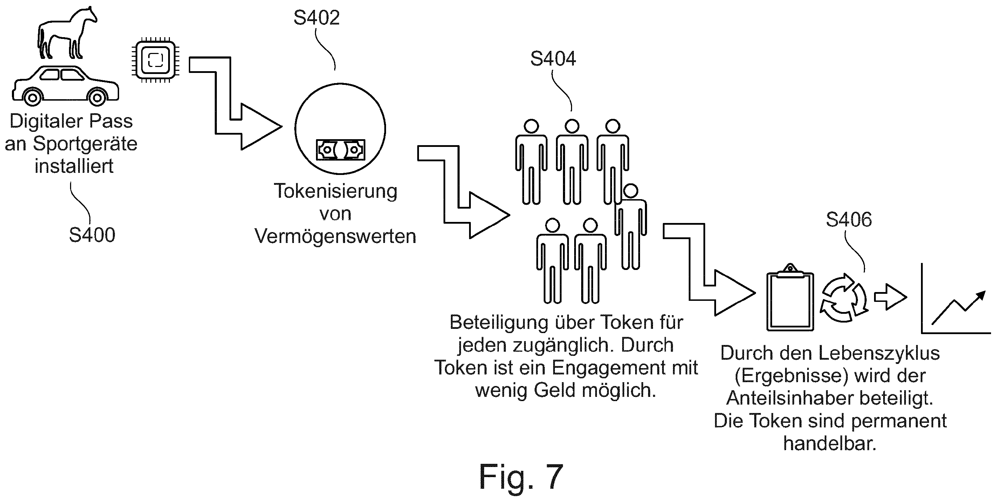

Im Falle einer Implementierung eines digitalen Sportausrüstungs- oder Sportgerätepasses gemeinsam mit einer sogenannten Tokenisierung einer Anlageklasse ("Tokenisation of Asset) ergibt sich durch den Einsatz des Systems 10 sowie des Authentifizierungs- und/oder Identifizierungselements 40 eine weitere Einsatzmöglichkeit, wie in Fig. 7 näher dargestellt ist:
Im Schritt es S400 geht es zunächst darum, eine Sportausrüstung (z.B. ein Sattel für ein Pferd) oder insbesondere ein Sportgerät in Form eines Rennwagens, Pferd bereitzustellen, was normalerweise zu Beginn einer Sportveranstaltung erfolgt.

Im Schritt S402 erfolgt sodann die Tokenisierung einer Anlageklasse (z.B. des Rennwagens wie in Fig. 7 dargestellt, wobei auch andere Vermögenswerte wie Unternehmensanteile, Güter, physische Gegenstände, Rechte und sich Lizenzen tokenisieren lassen. Hierbei werden im Rahmen dieses Prozesses digitale Abbildungen eines Vermögenswertes inklusive der entsprechenden Rechte und Pflichten in Form von Token abgebildet. Die generierten Token stellen das Eigentumsrecht an den jeweiligen Assets bzw. Vermögenswerten dar und werden in einer dezentralen Datenbank, z.B. der Blockchain, abgelegt).

Token stellen grundsätzlich ein Wertpapier eigener Art dar, da es sich aufgrund der Tokenisierung um am Finanzmarkt handelbar gemachte Vermögensanlagen handelt, die als Wertpapiere eingeordnet werden müssen.

Das Authentifizierungs- und/oder Identifizierungselement 40 kann somit einen physischen oder virtuellen Token umfassen. Als Token kann ein Gegenstand bezeichnet werden, an den die Funktion des Authentifizierungs- und/oder Identifizierungselements geknüpft ist. Als Token kann ferner ein virtuelles Objekt verwendet werden, etwa eine Signaturdatei, ein oder mehrere Hash-Werte, ein Passwort, ein Bild, eine Datei oder ein anderes Objekt. Bei einem virtuellen Token kann ferner ein kryptografisches Verfahren genutzt werden, insbesondere um die Identität eines Nutzers zu bestätigen, wenn dieser etwa ein Passwort bereitstellen muss, oder um sicherzustellen, dass der Token aktuell und nicht veraltet ist.

Die Erzeugung bzw. die Bereitstellung eines solchen Tokens kann beispielsweise kabellos per WiFi, per Bluetooth oder auch per RFID oder NFC auf mehrere entsprechende mobile Nutzer-Endgeräte erfolgen, was das System 10 gemäß Schritt 404 implementiert. Insbesondere können die Token durch das System mit den Wagenpass-Daten verknüpft werden.

Um den Kurs bzw. den Wert der Token zu ermitteln bzw. für diese eine Bewertungsgrundlage zu schaffen, kann das System 10 die sich stetig aktualisierten Wagenpass-Daten heranziehen und den Token-Inhabern über ihre mobilen Endgeräte gemäß Schritt 406 wie vorstehend erläutert bereitstellen, so dass die Token-Inhaber (z.B. Rennsport-Fans) gemäß Schritt 406 vom Erfolg (aber auch vom Misserfolg) dieser tokenisierten Anlageklasse während ihrer Anlage-Lebensdauer (z.B. ein Rennwagen in der Formel 1) partizipieren können und Rennsport-Treibende (z.B. ein Formel 1 Team) zusätzliche Einnahmequellen unter Verwendung des erfindungsgemäßen Authentifizierungs- und/oder Identifizierungssystems 10 generieren können.

Das erfindungsgemäße Digitale Licensing unter Verwendung des erfindungsgemäßen Authentifizierungs- und/oder Identifizierungssystems 10 zum Authentifizieren und/oder Identifizieren eines Nutzers ist ein Produkt, welches, wie im Zusammenhang mit Fig. 7 beschrieben, das gesamte Lizenzwesen im Sport (Amateur / Profi) - und darüber hinaus - digitalisieren soll. Basierend auf einer eigens dafür entwickelten Blockchain bzw. Distributed Ledger Technologie soll bzw. wird dieses System in Zukunft die ganzen Abläufe, insbeosndere auch die Tokenisierung, kontaktlos und in Echtzeit ermöglichen.

### Bezugszeichenliste

- 10: System
- 20: externer Server
- 22: Speichermodul
- 24: Eingabe- und Datensammelmodul
- 26: Antragsmodul
- 28: Steuermodul
- 30: Überprüfungsmodul
- 40: Authentifizierungs- und/oder Identifizierungselement

- S1: Schritt S1
- S2: Schritt S2
- S3: Schritt S3
- S4: Schritt S4
- S5: Schritt S5

- S10: Schritt S10
- S12: Schritt S12
- S14: Schritt S14
- S16: Schritt S16
- S18: Schritt S18
- S20: Schritt S20

- S100: Schritt S100
- S102: Schritt S102
- S104: Schritt S104
- S106: Schritt S106
- S108a: Schritt S108a
- S108b: Schritt S108b
- S110: Schritt S110
- S112: Schritt S112

- S200: Schritt S200
- S202: Schritt S202
- S204: Schritt S204
- S206: Schritt S206
- S208: Schritt S208

- S300: Schritt S300
- S302: Schritt S302
- S304: Schritt S304
- S306: Schritt S306
- S308: Schritt S308

- S400: Schritt S400
- S402: Schritt S402
- S404: Schritt S404
- S406: Schritt S406

## Patentansprüche

1. Authentifizierungs- und/oder Identifizierungssystem (10) zum Authentifizieren und/oder Identifizieren eines Nutzers im Bereich des semi-professionellen Sports oder Profisports, mit
- wenigstens einem Speichermodul (22), wobei das Speichermodul (22) dazu eingerichtet ist, Identifikations- und Berechtigungsdaten, persönliche Daten des Nutzers, Informationen über dessen vergangene Teilnahme an Sportereignissen, erzielte Ergebnisse sowie Informationen über eine Sperre und die Zuordnung des Nutzers zu bestimmten Gruppen oder Kategorien zu speichern;
- wenigstens einem Authentifizierungs- und/oder Identifizierungselement (40), das einem Nutzer eindeutig zugeordnet ist;
- wenigstens einem Eingabe- und Datensammelmodul (24), das dem Nutzer nicht zugänglich ist und mittels dessen das Authentifizierungs- und/oder Identifizierungselement (40) erstellbar und/oder veränderbar ist;
- wenigstens einem Ausgabemodul, mittels dessen das Authentifizierungs-und/oder Identifizierungselement (40) auslesbar und anzeigbar ist, und
- einem Zeitnahmesystem, einem System zum Scoring und einer Datenbank, wobei das Eingabe- und Datensammelmodul (24) mit dem Zeitnahmesystem, dem System zum Scoring und der Datenbank zur Bereitstellung von Wettbewerbsdaten verbunden ist, um automatische Aktualisierungen des Speichermoduls (22) anhand der bereitgestellten Wettbewerbsdaten auszuführen, und
wobei das Authentifizierungs- und/oder Identifizierungssystem (10) ferner wenigstens ein Überprüfungsmodul (30) aufweist, mittels dessen das Authentifizierungs- und/oder Identifizierungselement (40) automatisch überprüfbar ist, wobei das Überprüfungsmodul (30) ein Lesegerät zum Auslesen und/oder Erfassen des Authentifizierungs- und/oder Identifizierungselements (40) umfasst,
wobei das Überprüfungsmodul (30) ferner dazu eingerichtet ist, anhand des erfassten Authentifizierungs- und/oder Identifizierungselements (40) Anfragedaten zu erzeugen und an das Speichermodul (22) zu übertragen, wobei weiter ein Freigabedatenerzeugungsmodul vorgesehen ist, das dazu eingerichtet ist, auf der Grundlage der Anfragedaten sowie der im Eingabe- und Datensammelmodul (24) vorgehaltenen Daten zum jeweiligen Nutzer Freigabedaten zu erzeugen und dem Überprüfungsmodul (30) zur Überprüfung zuzuleiten.

2. Authentifizierungs- und/oder Identifizierungssystem (10) nach Anspruch 1, wobei das Speichermodul (22) als zentrales und/oder dezentrales Speichermodul (22) ausgebildet ist.

3. Authentifizierungs- und/oder Identifizierungssystem (10) nach Anspruch 1 oder Anspruch 2, wobei das Authentifizierungs- und/oder Identifizierungselement (40) aus einem mittels des Eingabe- und Datensammelmoduls (24) erstellten Datensatzes, insbesondere elektronischen und/oder digitalen Datensatzes, besteht.

4. Authentifizierungs- und/oder Identifizierungssystem (10) nach einem der Ansprüche 1 bis 3, wobei die von dem Überprüfungsmodul (30) erzeugten Anfragedaten eine Zuordnung des Nutzers zu einer bestimmten Kategorie umfassen.

5. Authentifizierungs- und/oder Identifizierungssystem (10) nach einem der Ansprüche 1 bis 4, wobei das Authentifizierungs- und/oder Identifizierungssystem (10) dazu eingerichtet ist, zumindest teilweise die Anfragedaten und/oder die Freigabedaten mittels eines kryptographischen Verfahrens, insbesondere eines Blockchain-Verfahrens zu erzeugen.

6. Authentifizierungs- und/oder Identifizierungssystem (10) nach einem der Ansprüche 1 bis 5, wobei das Überprüfungsmodul (30) ferner dazu eingerichtet ist, anhand der empfangenen Freigabedaten eine Freigabeinformation zu erzeugen und auszugeben.

7. Authentifizierungs- und/oder Identifizierungssystem (10) nach Anspruch 6, wobei die Freigabeausgabe ein grafisches Freigabe-Signal-Element umfasst, das einen in Abhängigkeit von den Freigabedaten gebildeten farblichen Ausgabeparameter umfasst.

8. Authentifizierungs- und/oder Identifizierungssystem (10) nach einem der vorhergehenden Ansprüche, wobei weiter wenigstens ein Antragsmodul (26) vorgesehen ist, das dazu eingerichtet ist, eine Nutzereingabe zu erfassen, in Abhängigkeit von der Nutzereingabe Änderungsdaten zu erzeugen, und anhand der Änderungsdaten bei dem Speichermodul (22) gespeicherte Authentifizierungs- und/oder Identifizierungsdaten zu ändern.

9. Verfahren zum Authentifizieren und/oder Identifizieren eines Nutzers im Bereich des semi-professionellen Sports oder Profisports, mit den folgenden Schritten:
- ein Authentifizierungs- und/oder Identifizierungselement, das einem Nutzer eindeutig zugeordnet ist; wird mittels wenigstens eines Eingabe- und Datensammelmoduls (24), das dem Nutzer nicht zugänglich ist, erzeugt und mittels dessen das Authentifizierungs- und/oder Identifizierungselement (40) erstellbar und/oder veränderbar ist;
- es wird wenigstens einem Ausgabemodul bereitgestellt, mittels dessen das Authentifizierungs- und/oder Identifizierungselement (40) auslesbar und anzeigbar ist,
- es wird ein Zeitnahmesystem, ein System zum Scoring und eine Datenbank in Verbindung mit dem Eingabe- und Datensammelmodul (24) bereitgestellt, um Wettbewerbsdaten bereitzustellen und automatische Aktualisierungen eines Speichermoduls (22) anhand der bereitgestellten Wettbewerbsdaten auszuführen,
- wobei das Speichermodul (22) dazu eingerichtet ist, Identifikations- und Berechtigungsdaten, persönliche Daten des Nutzers, Informationen über dessen vergangene Teilnahme an Sportereignissen, erzielte Ergebnisse sowie Informationen über eine Sperre und die Zuordnung des Nutzers zu bestimmten Gruppen oder Kategorien zu speichern,
- wobei das Verfahren ferner wenigstens ein Überprüfungsmodul (30) aufweist, mittel dessen das Authentifizierungs- und/oder Identifizierungselement (40) automatisch überprüfbar ist, und wobei das Überprüfungsmodul (30) ein Lesegerät aufweist,
- wobei das Überprüfungsmodule (30) dazu eingerichtet ist, das Lesegerät zum Auslesen und/oder Erfassen des Authentifizierungs- und/oder Identifizierungselements (40) ansteuern,
- wobei das Überprüfungsmodul (30) ferner dazu eingerichtet ist, anhand des erfassten Authentifizierungs- und/oder Identifizierungselements (40) Anfragedaten zu erzeugen und an das Speichermodul (22) zu übertragen,
- wobei weiter ein Freigabedatenerzeugungsmodul vorgesehen ist, das dazu eingerichtet ist, auf der Grundlage der Anfragedaten sowie der im Eingabe- und Datensammelmodul (24) vorgehaltenen Daten zum jeweiligen Nutzer Freigabedaten zu erzeugen und dem Überprüfungsmodul (30) zur Überprüfung zuzuleiten.

10. Verfahren nach Anspruch 9, wobei das Verfahren unter Verwendung des Authentifizierungs- und/oder Identifizierungssystem (10) nach einem der Ansprüche 1 bis 8 durchgeführt wird.

11. Verwendung eines Authentifizierungs- und/oder Identifizierungssystem (10) nach einem der Ansprüche 1 bis 8 zum Feststellen einer Teilnahmeberechtigung eines Nutzers an einem Event, insbesondere an einem Sportereignis.

12. Verwendung eines Authentifizierungs- und/oder Identifizierungssystem (10) nach einem der Ansprüche 1 bis 8 zum Implementieren eines digitalen und/oder elektronischen Sportausrüstungs- und/oder Sportgerätepasses, insbesondere eines Kraftfahrzeugpasses.

## Claims

1. Authentication and/or identification system (10) for authenticating and/or identifying a user in the field of semi-professional or professional sports, comprising
- at least one storage module (22), wherein the storage module (22) is designed to store identification and authorization data, personal data of the user, information about their past participation in sporting events, results achieved, as well as information about a suspension and the assignment of the user to certain groups or categories;
- at least one authentication and/or identification element (40) that is uniquely assigned to a user;
- at least one input and data collection module (24) that is not accessible to the user and by means of which the authentication and/or identification element (40) can be created and/or modified;
- at least one output module by means of which the authentication and/or identification element (40) can be read and displayed, and
- a timing system, a scoring system, and a database, wherein the input and data collection module (24) is connected to the timing system, the scoring system, and the database for providing competition data in order to perform automatic updates of the storage module (22) based on the provided competition data, and
wherein the authentication and/or identification system (10) further comprises at least one verification module (30) by means of which the authentication and/or identification element (40) can be automatically verified, the verification module (30) comprising a reader for reading and/or detecting the authentication and/or identification element (40),
wherein the verification module (30) is further configured to generate query data based on the detected authentication and/or identification element (40) and to transmit it to the storage module (22), wherein a release data generation module is further provided, which is designed to generate release data on the basis of the query data and the data kept in the input and data collection module (24) for the respective user and to forward it to the verification module (30) for verification.

2. The authentication and/or identification system (10) according to claim 1, wherein the storage module (22) is designed as a central and/or decentralized storage module (22).

3. The authentication and/or identification system (10) according to claim 1 or claim 2, wherein the authentication and/or identification element (40) consists of a data record, in particular an electronic and/or digital data record, which is created by means of the input and data collection module (24).

4. The authentication and/or identification system (10) according to any one of claims 1 to 3, wherein the query data generated by the verification module (30) comprises an assignment of the user to a specific category.

5. The authentication and/or identification system (10) according to any one of claims 1 to 4, wherein the authentication and/or identification system (10) is designed to generate at least part of the query data and/or of the release data using a cryptographic method, in particular a blockchain method.

6. The authentication and/or identification system (10) according to any one of claims 1 to 5, wherein the verification module (30) is further configured to generate and output release information based on the received release data.

7. The authentication and/or identification system (10) according to claim 6, wherein the release output comprises a graphical release signal element that comprises a colored output parameter formed as a function of the release data.

8. The authentication and/or identification system (10) according to any one of the preceding claims, wherein at least one request module (26) is further provided, which is designed to detect a user input, generate change data depending on the user input, and change authentication and/or identification data stored in the storage module (22) based on the change data.

9. A method for authenticating and/or identifying a user in the field of semi-professional or professional sports, comprising the following steps:
- an authentication and/or identification element that is uniquely assigned to a user is generated by means of at least one input and data collection module (24) that is not accessible to the user and by means of which the authentication and/or identification element (40) can be created and/or modified;
- at least one output module is provided, by means of which the authentication and/or identification element (40) can be read and displayed,
- a timing system, a scoring system, and a database in connection with the input and data collection module (24) are provided in order to provide competition data and to perform automatic updates of a storage module (22) based on the competition data provided,
- the storage module (22) being configured to store identification and authorization data, personal data of the user, information about their past participation in sporting events, results achieved, as well as information about a suspension and the assignment of the user to certain groups or categories,
- the method further comprising at least one verification module (30) by means of which the authentication and/or identification element (40) can be automatically verified, and the verification module (30) comprising a reader,
- the verification module (30) being designed to control the reader for reading and/or detecting the authentication and/or identification element (40),
- the verification module (30) being further adapted to generate query data based on the detected authentication and/or identification element (40) and to transmit it to the storage module (22),
- a release data generation module being further provided, which is designed to generate release data based on the query data and the data kept in the input and data collection module (24) for the respective user and to forward it to the verification module (30) for verification.

10. The method according to claim 9, wherein the method is carried out using the authentication and/or identification system (10) according to any one of claims 1 to 8.

11. Use of an authentication and/or identification system (10) according to any one of claims 1 to 8 for determining a user's authorization to participate in an event, in particular a sporting event.

12. Use of an authentication and/or identification system (10) according to any one of claims 1 to 8 for implementing a digital and/or electronic sports equipment and/or sports device pass, in particular a motor vehicle pass.

## Revendications

1. Système d'authentification et/ou d'identification (10) destiné à authentifier et/ou identifier un utilisateur dans le domaine du sport semi-professionnel ou professionnel, comprenant
- au moins un module de mémoire (22), sachant que le module de mémoire (22) est configuré pour mémoriser des données d'identification et d'autorisation, des données personnelles de l'utilisateur, des informations sur sa participation antérieure à des événements sportifs, des résultats obtenus ainsi que des informations sur une suspension et l'attribution de l'utilisateur à des groupes ou catégories déterminés ;
- au moins un élément d'authentification et/ou d'identification (40) qui est attribué de manière univoque à un utilisateur ;
- au moins un module d'entrée et de collecte de données (24) qui n'est pas accessible à l'utilisateur et au moyen duquel l'élément d'authentification et/ou d'identification (40) peut être créé et /ou modifié ;
- au moins un module de sortie au moyen duquel l'élément d'authentification et/ou d'identification (40) peut être lu et affiché, et
- un système de chronométrage, un système de score et une base de données, sachant que le module d'entrée et de collecte de données (24) est relié au système de chronométrage, au système de score et à la base de données pour la mise à disposition de données de compétition afin d'exécuter des mises à jour automatiques du module de mémoire (22) à l'aide des données de compétition mises à disposition, et
sachant que le système d'authentification et/ou d'identification (10) présente en outre au moins un module de vérification (30) au moyen duquel l'élément d'authentification et/ou d'identification (40) est vérifiable automatiquement, sachant que le module de vérification (30) comprend un appareil de lecture destiné à lire et/ou saisir l'élément d'authentification et/ou d'identification (40),
sachant que le module de vérification (30) est en outre configuré pour générer, à l'aide de l'élément d'authentification et/ou d'identification (40) saisi, des données de requête et les transmettre au module de mémoire (22), sachant qu'en outre un module de génération de données de validation est prévu, lequel est configuré pour générer, sur la base des données de requête ainsi que des données présentes dans le module d'entrée et de collecte de données (24) sur l'utilisateur respectif, des données de validation et les adresser au module de vérification (30) pour vérification.

2. Système d'authentification et/ou d'identification (10) selon la revendication 1, sachant que le module de mémoire (22) est constitué comme module de mémoire (22) central ou/et décentralisé.

3. Système d'authentification et/ou d'identification (10) selon la revendication 1 ou la revendication 2, sachant que l'élément d'authentification et/ou d'identification (40) est composé d'un jeu de données, en particulier un jeu de données électronique et/ou numérique, créé au moyen du module d'entrée et de collecte de données (24).

4. Système d'authentification et/ou d'identification (10) selon l'une des revendications 1 à 3, sachant que les données de requête générées par le module de vérification (30) comprennent une attribution de l'utilisateur à une catégorie déterminée.

5. Système d'authentification et/ou d'identification (10) selon l'une des revendications 1 à 4, sachant que le système d'authentification et/ou d'identification (10) est configuré pour générer au moins en partie les données de requête et/ou les données de validation au moyen d'un procédé cryptographique, en particulier d'un procédé de chaîne de blocs.

6. Système d'authentification et/ou d'identification (10) selon l'une des revendications 1 à 5, sachant que le module de vérification (30) est en outre configuré pour générer et sortir une information de validation à l'aide des données de validation reçues.

7. Système d'authentification et/ou d'identification (10) selon la revendication 6, sachant que la sortie de validation comprend un élément de signal de validation graphique qui comprend un paramètre de sortie en couleur formé en fonction des données de validation.

8. Système d'authentification et/ou d'identification (10) selon l'une des revendications précédentes, sachant qu'en outre au moins un module de demande (26) est prévu, lequel est configuré pour saisir une entrée d'utilisateur, générer des données de modification en fonction de l'entrée d'utilisateur, et modifier des données d'authentification et/ou d'identification mémorisées dans le module de mémoire (22) à l'aide des données de modification.

9. Procédé destiné à authentifier et/ou identifier un utilisateur dans le domaine du sport semi-professionnel ou professionnel, comprenant les étapes suivantes :
- un élément d'authentification et/ou d'identification qui est attribué de manière univoque un utilisateur est généré au moyen d'un module d'entrée et de collecte de données (24) qui n'est pas accessible à l'utilisateur et, au moyen de cela, l'élément d'authentification et/ou d'identification (40) peut être créé et/ou modifié ;
- au moins un module de sortie est mis à disposition, au moyen duquel l'élément d'authentification et/ou d'identification (40) peut être lu et affiché,
- un système de chronométrage, un système de score et une base de données en liaison avec le module d'entrée et de collecte de données (24) sont mis à disposition pour mettre à disposition des données de compétition et exécuter des mises à jour automatiques d'un module de mémoire (22) à l'aide des données de compétition mises à disposition,
- sachant que le module de mémoire (22) est configuré pour mémoriser des données d'identification et d'autorisation, des données personnelles de l'utilisateur, des informations sur sa participation antérieure à des événements sportifs, des résultats obtenus ainsi que des informations sur une suspension et l'attribution de l'utilisateur à des groupes ou catégories déterminés,
- sachant que le procédé présente en outre au moins un module de vérification (30) au moyen duquel l'élément d'authentification et/ou d'identification (40) est vérifiable automatiquement, sachant que le module de vérification (30) présente un appareil de lecture,
- sachant que le module de vérification (30) est configuré pour commander l'appareil de lecture pour lire et/ou saisir l'élément d'authentification et/ou d'identification (40),
- sachant que le module de vérification (30) est en outre configuré pour générer, à l'aide de l'élément d'authentification et/ou d'identification (40) saisi, des données de requête et les transmettre au module de mémoire (22),
- sachant qu'en outre un module de génération de données de validation est prévu, lequel est configuré pour générer, sur la base des données de requête ainsi que des données présentes dans le module d'entrée et de collecte de données (24) sur l'utilisateur respectif, des données de validation et les adresser au module de vérification (30) pour vérification.

10. Procédé selon la revendication 9, sachant que le procédé est effectué en utilisant le système d'authentification et/ou d'identification (10) selon l'une des revendications 1 à 8.

11. Utilisation d'un système d'authentification et/ou d'identification (10) selon l'une des revendications 1 à 8 pour constater une autorisation de participation d'un utilisateur à un événement, en particulier à un événement sportif.

12. Utilisation d'un système d'authentification et/ou d'identification (10) selon l'une des revendications 1 à 8 pour implémenter un passeport numérique et/ou électronique d'équipement sportif et/ou d'appareil sportif, en particulier un passeport de véhicule.
